(19) Europäisches Patentamt
European Patent Office
Office européen des brevets

(11) Veröffentlichungsnummer: **0 078 805**
**B1**

(12) # EUROPÄISCHE PATENTSCHRIFT

(45) Veröffentlichungstag der Patentschrift: **24.07.85**

(51) Int. Cl.⁴: **E 21 B 43/22**, C 08 F 226/02

(21) Anmeldenummer: **82900099.1**

(22) Anmeldetag: **14.12.81**

(86) Internationale Anmeldenummer: **PCT/EP 81/00192**

(87) Internationale Veröffentlichungsnummer: **WO 82/02073 (24.06.82 Gazette 82/16)**

(54) **WASSERLÖSLICHE, SÄURESTABILE COPOLYMERISATE, IHRE HERSTELLUNG UND VERWENDUNG.**

(30) Priorität: **15.12.80 US 216671**

(43) Veröffentlichungstag der Anmeldung: **18.05.83 Patentblatt 83/20**

(45) Bekanntmachung des Hinweises auf die Patenterteilung: **24.07.85 Patentblatt 85/30**

(84) Benannte Vertragsstaaten: **AT BE CH DE FR LI NL**

(56) Entgegenhaltungen:
**EP - A - 0 023 712**
**EP - A - 0 044 508**

(73) Patentinhaber: **CASSELLA Aktiengesellschaft, Hanauer Landstrasse 526, D-6000 Frankfurt am Main 61 (DE)**
Patentinhaber: **DRESSER INDUSTRIES,INC., The Dresser Building Elm & Akard Streets P.O. Box 718, Dallas Texas 75221 (US)**

(72) Erfinder: **ENGELHARDT, Friedrich, Hünfelder Strasse 20, D-6000 Frankfurt am Main 61 (DE)**
Erfinder: **KÜHLEIN, Klaus, Fasenenstrasse 41, D-6233 Kelkheim/Ts (DE)**
Erfinder: **RIEGEL, Ulrich, Steineckerstrasse 6, D-6000 Frankfurt am Main 61 (DE)**
Erfinder: **von HALASZ, Sigmar, Feldbergstrasse 50, D-6233 Kelkheim/Ts (DE)**
Erfinder: **DAWSON, Jeffrey C., 21431 Park Run, Katy, TX 77450 (US)**
Erfinder: **REED, Anthony R., 2501 Tanglewilde Blvd Apt. 70, Houston, TX 77063 (US)**

(74) Vertreter: **Urbach, Hans-Georg, Dr. et al, Hanauer Landstrasse 526, D-6000 Frankfurt am Main 61 (DE)**

**EP 0 078 805 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft neue wasserlösliche Copolymerisate, die in hohen Konzentrationen von Bronsted-Lowery-Säuren beständig sind, und die insbesondere als Reibungsverminderer für Säuren verwendet werden, die ihrerseits bei dem Verfahren der Säurestimulation von Erdöl- oder Erdgasbohrungen eingesetzt werden. Das erfindungsgemässe Copolymerisat enthält in statistischer Verteilung in seinem Makromolekül mindestens 5 Gew.-% von Einheiten, die eine Formylaminogruppe (A) aufweisen und mindestens 10 Gew.-% von Einheiten, die eine Aminocarbonylgruppe (B) enthalten

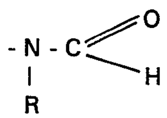

(A)

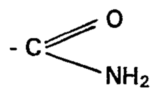

(B)

Eine bekannte Stimulationstechnik für Erdöl- und Erdgasbohrungen die zum Zwecke der Steigerung der Förderrate und der Gesamtausbeute aus unterirdischen Carbonatformationen eingesetzt wird, ist die sogenannte Drucksäuerung. Carbonatformationen in diesem Sinne sind beispielsweise Dolomit, Kalkstein oder andere Lagergesteine, die kalkartiges Material enthalten. Die Drucksäuerung wird in der Regel so durchgeführt, dass eine wässrige Säure, welche gegebenenfalls noch sogenannte Stützmittel enthalten kann, in die zu stimulierende Bohrung eingepumpt wird und zwar unter einem Druck, der den Formationsdruck übersteigt. Dies hat zur Folge, dass neue Risse und Kanäle, sogenannte Frakturen, in die Formation gesprengt werden. Bei der Technik der Drucksäuerung werden durch die eingepresste Säure zusätzlich die Oberflächen der Gesteinsfrakturen angeätzt und, sofern die Säure zusätzlich ein Stützmittel enthält, wird dieses Stützmittel in die geöffneten Frakturen hineintransportiert. Sowohl die unregelmässige Anätzung der heterogenen Fraktur-Oberfläche als auch die Einlagerung des Stützmaterials führen dazu, dass die Frakturen nach Druckentlastung sich nicht mehr vollständig schliessen können. In jedem Fall entsteht so ein besser durchlässiger Kanal, der es dem Erdöl bzw. Erdgas gestattet, nach Druckentlastung auf die Förderbohrung zuzufliessen.

Bei der Technik der Drucksäuerung ist es erforderlich, die Säure, das sogenannte Fluid, mit grosser Geschwindigkeit in die Bohrung einzupumpen, damit sich der erforderliche Sprengdruck für das Gestein aufbauen kann. Hierbei zeigt es sich, dass ein gravierender Anteil des Injektionsdruckes durch Reibungskräfte verlorengeht, die zwischen dem in turbulenter Strömung einfliessenden Fluid und den Leitungswänden auftreten. Da dieser Druckverlust, der sogenannte Reibungsdruck, mit der Injektionsgeschwindigkeit ansteigt, wird mit steigender Injektionsgeschwindigkeit ein immer geringerer Druckanteil als Behandlungsdruck hydraulisch auf die Formation übertragen. Durch Zusatz geringer Konzentrationen von Polymeren zu dem Behandlungsfluid wird nun die Strömung des eingepumpten Fluids laminarisiert, so dass auch bei hohen Injektionsgeschwindigkeiten der Reibungsdruck erheblich vermindert wird, und somit ein wesentlich grösserer Anteil des Kopfdruckes auf das Lagergestein übertragen wird.

Gebräuchliche Reibungsverminderer, die bei der Durchführung der Drucksäuerung eingesetzt werden, sind Polysaccharide, wie z.B. Hydroxyethylzellulose, Xanthan-Gummi (Stoffwechselprodukt von Xanthomonas campestris) hydroxypropyliertes Guargummi (aus den Samen von Cyanaposis tetragonolibus) oder synthetische Polymere auf der Basis von Polyacrylamid.

Beim Einsatz von Polysacchariden als Reibungsverminderer ergeben sich dadurch Probleme, dass diese Verbindungen in hoch konzentrierten Säuren wenig beständig sind. Normalerweise werden Polysaccharide in starken Säuren hydrolisiert oder abgebaut, wobei die reibungsvermindernde Wirkung verloren geht. Auch der Einsatz von synthetischen Polyacrylamiden als Reibungsverminderer hat technische Nachteile:

In Gegenwart von starken Säuren werden Polyacrylamide schnell zu unlöslichen Abbauprodukten hydrolysiert. Diese fallen aus den Behandlungsfluids aus und können durch Verstopfung der Frakturen zu einer Behinderung des Öl- bzw. Gasflusses und damit zu einer schweren Schädigung der Lagerstätte führen.

Die vorliegende Erfindung betrifft nun ein Copolymerisat, das als verbesserter Reibungsverminderer für die Drucksäuerung von unterirdischen, kalkhaltigen Formationen eingesetzt werden kann. Das erfindungsgemässe Polymerisat ist säurelöslich, und auch seine Abbauprodukte sind sowohl säurelöslich als auch stabil.

Vorzugsweise setzen sich die neuen erfindungsgemässen Copolymerisate zusammen aus 5 bis 50 Gew.-% von Einheiten der Formel I

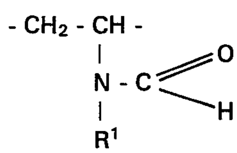

(I)

10 bis 95 Gew.-% von Einheiten der Formel II

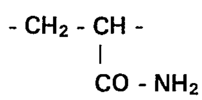

(II)

und 0 bis 85 Gew.-% von Einheiten der Formel (III)

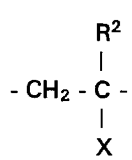

(III)

worin $R^1$ für Wasserstoff, Methyl oder Hydroxymethyl und $R^2$ für Wasserstoff oder Methyl steht und X Cyan, Carboxyl, oder dessen Alkali oder Ammoniumsalze, Alkoxycarbonyl mit 1 bis 6, vorzugsweise 1 bis 3, Kohlenstoffatomen, Hydroxyalkoxycarbonyl mit 1 bis 3 Kohlenstoffatomen; N-Methylolamidocarbonyl der Formel $HOCH_2NH\text{-}CO\text{-}$, dessen Methylolgruppe gegebenenfalls mit Alkanolen mit 1 bis 4 Kohlenstoffatomen veräthert sein kann; Alkanoylamino mit 1 bis 4 Kohlenstoffatomen, das gegebenenfalls durch Methylol oder Alkyl mit 1 bis 4 Kohlenstoffatomen N-substituiert sein kann; Pyrrolidonyl-(1); Phenyl; Pyridinium; die Sulfonsäuregruppe; Sulfoalkylamidocarbonyl mit 1 bis 4 Kohlenstoffatomen; die Phosphonsäuregruppe, wobei Sulfonsäure und Phosphonsäuregruppen auch als Alkali- oder Ammoniumsalze vorliegen können; einen Rest der Formel IV

$$\begin{array}{c} \text{O} \\ \| \\ \text{-}\,COOCH_2CH_2\,\text{-}\,O\,\text{-}\,\overset{}{P}\,\text{-}\,R^3 \\ \| \\ R^4 \end{array} \qquad \text{(IV)}$$

worin $R^3$ und $R^4$ gleich oder verschieden sind und für Alkyl mit 1 bis 4, vorzugsweise 1 oder 2, Kohlenstoffatomen stehen; einen Rest der Formel V

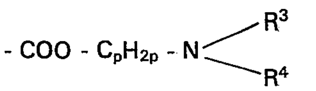

(V)

worin $R^3$ und $R^4$ die oben angegebenen Bedeutungen haben und p für eine Zahl von 1 bis 4 steht; oder einen Rest der Formel VI

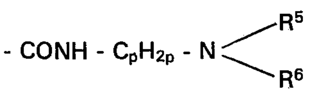

(VI)

worin $R^5$ und $R^6$ gleich oder verschieden sind und für Alkyl mit 1 bis 4, vorzugsweise 1 oder 2, Kohlenstoffatomen stehen und p für eine Zahl von 1 bis 4 steht; sowie die den Formeln V und VI entsprechenden, beispielsweise durch Dimethyisulfat oder Methylchlorid quaternisierten Gruppen bedeutet.

Die erfindungsgemässen Copolymerisate sind statistisch, d.h. dass die Verteilung der Einheiten I bis III in dem Makromolekül statistisch ist.

Selbstverständlich können die erfindungsgemässen Copolymerisate mehrere verschiedene Einheiten der Formeln I und III enthalten. z.B. verschiedene Einheiten der Formel III, die sich durch unterschiedliche Bedeutung der Reste X oder $R^2$ voneinander unterscheiden. In der Regel hat in einem einzelnen Makromolekül X nicht mehr als drei, vorzugsweise nicht mehr als zwei, verschiedene Bedeutungen. Copolymerisate dieser Art werden hergestellt, indem man mehrere verschiedene Comonomere, in der Regel nicht mehr als drei, vorzugsweise nicht mehr als zwei, die sich durch unterschiedliche Bedeutungen des Restes X und/oder $R^2$ voneinander unterscheiden, bei der Copolymerisation einsetzt. In der Regel haben die Copolymerisate dieser Erfindung K-Werte (vgl. Fikentscher, «Cellulosechemie» Bd. 13, S. 58 [1932]) zwischen 25 und 250, was Molekulargewichten zwischen 20.000 und $15 \times 10^6$ entspricht. Als Reibungsverminderer bevorzugt sind solche erfindungsgemässen Copolymerisate, die K-Werte zwischen 50 und 200 aufweisen entsprechend Molekulargewichten zwischen 100.000 und $4 \times 10^6$.

Bevorzugte erfindungsgemässe Copolymerisate bestehen aus
5 bis 30 Gew.-% von Einheiten der Formel I,
50 bis 80 Gew.-% von Einheiten der Formel II und
1 bis 60 Gew.-% von Einheiten der Formel III.

Weiterhin sind solche Copolymerisate bevorzugt, in denen $R^2$ Wasserstoff oder Methyl bedeutet oder solche, in denen X Carboxyl, die Sulfonsäuregruppe, 3-Sulfo-2-methyl-propyl-(2)-amidocarbonyl der Formel

$$\begin{array}{c} CH_3 \\ | \\ \text{-}\,CONH\,\text{-}\,C\,\text{-}\,CH_2\,\text{-}\,SO_3H \\ | \\ CH_3 \end{array}$$

Alkanoylamino mit bis zu 4 Kohlenstoffatomen, das gegebenenfalls mit Methylol oder Alkyl mit 1 bis 4 Kohlenstoffatomen N-substituiert sein kann, Pyrrolidonyl-(1) oder einen Rest der obenangegebenen und definierten Formeln V oder VI bedeutet, wobei jede Säuregruppe auch als Natrium-Kalium- oder Ammoniumsalz vorliegen kann.

Besonders bevorzugt für den Einsatz als Reibungsverminderer bei der Stimulation von Erdgas- oder Erdölbohrungen sind solche erfindungsgemässe Copolymerisate, in die die Einheiten der Formel I durch Mitverwendung von N-Vinylformamid und die Einheiten der Formel III durch Mitverwendung von N--Vinyl-N-methyl-acetamid, N-Vinylpyrrodilon oder 2-Acrylamido-2-methyl-propan-sulfonsäure oder Mischungen davon bei der Copolymerisation eingeführt wurden.

Die erfindungsgemässen Copolymerisate sind leicht in Wasser oder wässrigen Säuren löslich und können daher leicht gehandhabt werden. Beim Einsatz in Drucksäuerungsverfahren können die Polymerisate der Säure in Form von wässrigen 0,5 bis 6 gew.%igen Lösungen zugesetzt werden (Polymerisatlösungen mit einer Konzentration über 6 Gew.-% sind zu viskos und daher schwierig zu handhaben), in Form von Kohlenwasserstoff-Dispersionen, die Emulgiermittel und 20 bis 50 Gew.-% des Polymerisats enthalten, oder in Form von Öl-in-Wasser oder Wasser-in-Öl-Emulsionen, die Emulgatoren und 20 bis 50 Gew.-% des Polymerisats enthalten. Bevorzugt werden die erfindungsgemässen Copolymerisate in Form einer Wasser-in-Öl-Emulsion mit dem höchstmöglichen Polymergehalt, normalerweise 20 bis 75 Gew.-%, eingesetzt. Öle, die für die Herstellung dieser Wasser-in-Öl-Emulsionen geeignet sind, sind beispielsweise verzweigte oder unverzweigte Paraffin-Kohlenwasserstoff-Fraktionen mit einem Siedebereich von 150 bis 250°C. Je nach der Monomeren-Zusammensetzung und den daraus resultierenden Eigenschaften wirken die erfindungsgemässen Copolymerisate in Konzentrationen von 0,06 bis 0,12 Gew.-%, bei Temperaturen von normaler Raumtemperatur bis zu Temperaturen oberhalb 80°C als hocheffektive Reibungsverminderer, wobei die Wirkungsdauer lange Zeit, beispielsweise mehr als 10 Tage anhält. Selbst beim Eintreten von

hydrolytischem Abbau von Seitenketten des Copolymerisats bleiben die Abbauprodukte säurelöslich und scheiden sich nicht aus der Lösung aus. Vorzugsweise werden die erfindungsgemässen Copolymerisate mit Säuren kombiniert, die unter Normalbedingungen flüssig sind und insbesondere mit anorganischen oder starken niederen organischen Säuren. Beispiele für Säuren, die gemeinsam mit dem erfindungsgemässen Copolymerisat eingesetzt werden können, sind Fluorwasserstoffsäure, Chlorwasserstoffsäure, Ameisensäure, Essigsäure, Monochloressigsäure, Dichloressigsäure oder Trichloressigsäure. Am gebräuchlichsten ist der Einsatz von Chlorwasserstoffsäure, die in Konzentrationen von 3 bis 28 Gew.-% eingesetzt wird, je nach den erforderlichen Behandlungsbedingungen und den Eigenschaften der Lagerstätte.

Die erfindungsgemässen Copolymerisate werden hergestellt durch Copolymerisation von 5 bis 50 Gew.-% eines gegebenenfalls N-substituierten Vinylformamids der Formel Ia

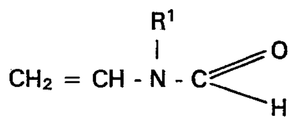

(Ia)

10 bis 95 Gew.-% Acrylamid und 0 bis 85 Gew.-% eines ethylenisch ungesättigten Monomers der Formel IIIa

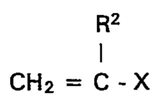

(IIIa)

worin $R^1$, $R^2$ und X die oben angegebenen Bedeutungen haben.

Vorzugsweise werden 5 bis 30 Gew.-% des Vinylformamids der Formel (Ia), 50 bis 80 Gew.-% Acrylamid und 1 bis 60 Gew.-% des Monomers der Formel IIIa copolymerisiert. Eine besonders bevorzugte Zusammensetzung ist 10 bis 20 Gew.-% N-Vinylformamid, 50 bis 70 Gew.-% Acrylamid und 10 bis 40 Gew.-% eines Monomers der Formel IIIa.

Sollen Copolymere hergestellt werden, die mehrere Reste X und/oder $R^2$ in der Komponente III aufweisen, so werden zur Copolymerisation mehrere verschiedene, in der Regel 3, oder vorzugsweise 2, verschiedene Comonomere der Formel IIIa eingesetzt.

Die Copolymerisation kann nach allen bekannten Polymerisationsverfahren im Bereich von pH 4 bis 12, vorzugsweise 6 bis 9, durchgeführt werden.

Zur Einstellung des pH-Wertes werden zweckmässigerweise alkalisch reagierende Salze von Alkalimetallen, z.B. Alkalikarbonate, Alkalihydrogenkarbonate, Alkaliborate, Di- oder Tri-Alkaliphosphate, Alkalihydroxide, Ammoniak oder organische Amine der Formel $NR_3{}^7$ eingesetzt, worin $R^7$ Wasserstoff, Alkyl mit 1 bis 4 Kohlenstoffatomen oder Hydroxyethyl ist und wobei mindestens einer der Reste $R^7$ verschieden ist von Wasserstoff. Bevorzugte Basen zur Einstellung des pH-Wertes sind die obengenannten Alkali-Verbindungen, insbesondere Natriumhydroxid, Kaliumhydroxid, Natriumkarbonat, Natriumhydrogenkarbonat, Kaliumkarbonat und Kaliumhydrogenkarbonat und Natrium- oder Kaliumborate. Eine weitere bevorzugte Base ist $NH_3$.

Die Polymerisationsreaktion kann initiiert werden durch energiereiche elektromagnetische oder korpuskulare Strahlung oder durch Substanzen, die Radikale bilden. Dementsprechend sind als Polymerisationsinitiatoren geeignet organische Per-Verbindungen, wie z.B. Benzoylperoxid, Alkylhydroperoxid, wie z.B. Butylhydroperoxid, Cumolhydroperoxid, p-Menthanhydroperoxid, Dialkylperoxide, wie z.B. Di-, tert.-Butylperoxid oder anorganische Per-Verbindungen, wie z.B. Kalium- oder Ammoniumpersulfat und Wasserstoffperoxid, ferner Azoverbindungen, wie z.B. Azo-bis-isobutyronitril, 2,2'-Azo-bis-(2-amidinopropan)-hydrochlorid oder Azo-bis-isobutyramid. Es ist vorteilhaft, die organischen oder anorganischen Per-Verbindungen in Kombination mit reduzierenden Substanzen einzusetzen. Beispiele für geeignete reduzierende Substanzen sind Natriumpyrosulfit, Natrium-hydrogensulfit oder Kondensationsprodukte von Formaldehyd mit Sulfoxylaten. Besonders vorteilhaft lässt sich die Polymerisation unter Einsatz von Mannich-Addukten von Sulfinsäuren, Aldehyden und Amino-Verbindungen ausführen, wie sie beispielsweise im deutschen Patent 1 301 566 beschrieben worden sind.

Es ist weiterhin bekannt, den Polymerisationsansätzen kleine Mengen von sogenannten Moderatoren zuzusetzen, die den Verlauf der Reaktion dadurch harmonisieren, dass sie das Reaktionsgeschwindigkeits-Zeitdiagramm abflachen. Sie führen damit zu einer Verbesserung der Reproduzierbarkeit der Reaktion und ermöglichen damit, einheitliche Produkte mit äusserst geringen Qualitätsabweichungen herzustellen. Beispiele für geeignete Moderatoren dieses Typs sind Nitrilo-tris-propionylamid oder Hydrohalogenide von Monoalkylaminen, Dialkylaminen oder Trialkylaminen, wie z.B. Dibutylaminhydrochlorid. Auch bei der Herstellung der erfindungsgemässen Copolymerisate können solche Moderatoren mit Vorteil verwendet werden.

Weiterhin können den Polymerisationsansätzen sogenannte Regulatoren zugesetzt werden; das sind solche Verbindungen, die das Molekulargewicht der hergestellten Polymerisate beeinflussen. Brauchbare bekannte Regulatoren sind z.B. Alkohole, wie Methanol, Ethanol, Propanol, Isopropanol, n-Butanol, sec.-Butanol und Amylalkohole, Alkylmercaptane, wie z.B. Dodecylmercaptan und tert.-Dodecylmercaptan, Isooctylthioglycolat und einige Halogenverbindungen, wie z.B. Tetrachlorkohlenstoff, Chloroform und Methylenchlorid.

Üblicherweise wird die Polymerisation in einer Schutzgasatmosphäre ausgeführt, vorzugsweise unter Stickstoff.

Die Reaktion kann in Lösung, in Emulsion, oder unter den Bedingungen der Fällungspolymerisation bei Temperaturen von 20 bis 120°C, vorzugsweise von 40 bis 100°C, ausgeführt werden. Wenn Wasser als Lösungsmittel für die Polymerisationsreaktion eingesetzt wird, so verläuft sie in Lösung, und eine wässrige viskose Lösung des Copolymerisats wird erhalten.

Das Reaktionsprodukt kann isoliert werden, entweder durch Abdestillieren des Wassers aus der Lösung, oder durch Vermischen der wässrigen Lösung mit organischen Lösungsmitteln, die mit Wasser vollständig mischbar sind, in denen aber das Cpolymerisat unlöslich ist. Bei der Zugabe solcher organischen Lösungsmittel zu der wässrigen Polymerlösung fällt das entstandene Polymerisat bzw. Copolymerisat aus und kann von der flüssigen Phase, z.B. durch Filtration abgetrennt werden. Vorzugsweise wird jedoch die erhaltene wässrige Lösung des Polymerisats bzw. Copolymerisats direkt für den weiteren Gebrauch eingesetzt, gegebenenfalls nach Einstellung auf eine bestimmte gewünschte Konzentration.

Wenn die Copolymerisation in einem organischen Lösungsmittel wie z.B. in einem niederen Alkanol, z.B. in tert.-Butanol, durchgeführt wird, so verläuft sie unter den Bedingungen der Fällungspolymerisation. In diesem Fall fällt das entstandene Polymerisat bzw. Copolymerisat im Verlauf der Reaktion in fester Form aus und kann leicht in üblicher Weise, wie z.B. durch Absaugen und anschliessendes Trocknen, isoliert werden. Selbstverständlich es ist auch möglich und in manchen Fällen bevorzugt, das Lösungsmittel aus dem Reaktionsansatz heraus zu destillieren.

Monomere, welche in die Copolymerisate Einheiten der Formel I einführen, sind N-Vinylformamid, N-Vinyl-methylformamid und N-Vinyl-N-hydroxymethylformamid, wobei die beiden zuerst genannten bevorzugt sind. Durch die Mitverwendung von Acrylamid bei der Copolymerisation werden Einheiten der Formel II in das Copolymerisat eingeführt. Einheiten der Formel III werden in das erfindungsgemässe Copolymerisat eingeführt durch Mitverwendung von einem oder mehreren, vorzugsweise 2 Monomeren der Formel

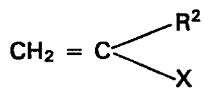

worin $R^2$ und X die folgenden Bedeutungen haben:

| | | | | | | |
|---|---|---|---|---|---|---|
| $R^2$ | $-H$ | $-CH_3$ | $-H$ | $-CH_3$ | $-H$ | $-H$ |
| X | $-CN$ | $-CN$ | $-COOH$ ① | $-COOH$ ① | $-COOCH_3$ | $-NH-CHO$ |

| | | | | | |
|---|---|---|---|---|---|
| $R^2$ | $-CH_3$ | $-H$ | $-CH_3$ | $-H$ | $-CH_3$ |
| X | $-COOCH_3$ | $-COOC_2H_5$ | $-COOC_2H_5$ | $-COOC_4H_9$ | $-COOC_4H_9$ |

| | | | | | |
|---|---|---|---|---|---|
| $R^2$ | $-H$ | $-H$ | $-CH_3$ | $-H$ | $-CH_3$ |
| X | $-COOC_6H_{13}$ | $-COOC_2H_4OH$ | $-COOC_2H_4OH$ | $-COOC_3H_6OH$ | $-COOC_3H_6OH$ |

| | | | | |
|---|---|---|---|---|
| $R^2$ | $-H$ | $-CH_3$ | $-H$ | $-CH_3$ |
| X | $-CONHCH_2OH$ | $-CONHCH_2OH$ | $-CONHCH_2OCH_3$ | $-CONHCH_2OCH_3$ |

| | | | |
|---|---|---|---|
| $R^2$ | $-H$ | $-CH_3$ | $-H$ |
| X | $-CONHCH_2OC_2H_5$ | $-CONHCH_2OC_2H_5$ | $-CONHCH_2OC_4H_9$ |

| | | | | |
|---|---|---|---|---|
| $R^2$ | $-H$ | $-H$ | $-H$ | $-CH_3$ |
| X | $-NHCOCH_3$ | $-NHCOC_2H_5$ | $-NHCOC_3H_7$ | $-N-CHO$<br>$\mid$<br>$CH_2OH$ |

| | | | | | |
|---|---|---|---|---|---|
| $R^2$ | $-H$ | $-H$ | $-H$ | $-CH_3$ | $-H$ |
| X | $-N-COCH_3$<br>$\mid$<br>$CH_2OH$ | $-N-COC_2H_5$<br>$\mid$<br>$CH_2OH$ | $-N-COC_3H_7$<br>$\mid$<br>$CH_2OH$ | $-N-CHO$<br>$\mid$<br>$CH_3$ | $-N-CHO$<br>$\mid$<br>$CH_2-OH$ |

| | | | |
|---|---|---|---|
| $R^2$ | $-H$ | $-H$ | $-H$ |
| X | $-N-COCH_3$<br>\|<br>$CH_3$ | $-N-COC_3H_6$<br>\|<br>$CH_3$ | $-N-COC_2H_5$<br>\|<br>$C_2H_5$ |

| | | | | | |
|---|---|---|---|---|---|
| $R^2$ | $-H$ | $-H$ | $-CH_3$ | $-H$ | $-H$ |
| X | $-N-COCH_3$<br>\|<br>$C_4H_9$ | 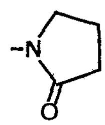 | 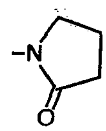 | 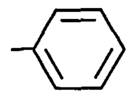 | $-SO_3H$ ① |

| | | | |
|---|---|---|---|
| $R^2$ | $-CH_3$ | $-H$ | $-CH_3$ |
| X | $-SO_3H$ ① | $-PO_3H_2$ ① | $-PO_3H_2$ ① |

| | | |
|---|---|---|
| $R^2$ | $-H$ | $-H$ |
| X | $-CONH-CH_2SO_3H$ ① | $-CONHCH_2CH_2CH_2SO_3H$ ① |

| | | |
|---|---|---|
| $R^2$ | $-H$ | $-H$ |
| X | $-CONHC_2H_4-SO_3H$ ① | $-CONHCH-CH_2-SO_3H$ ①<br>\|<br>$CH_3$ |

| | | |
|---|---|---|
| $R^2$ | $-H$ | $-H$ |
| X | $-CO-NH-CH_2CH_2CH_2CH_2-SO_3H$ ① | $-CO-NH-CH-CH_2CH_2-SO_3H$ ①<br>\|<br>$CH_3$ |

| | | |
|---|---|---|
| $R^2$ | $-H$ | |
| X | $CH_3$<br>\|<br>$-CO-NH-C-CH_2-SO_3H$ ①<br>\|<br>$CH_3$ | |

| | | |
|---|---|---|
| $R^2$ | $-CH_3$ | $-CH_3$ |
| X | $-CONH-C_2H_4SO_3H$ ① | $CH_3$<br>\|<br>$-CO-NH-C-CH_2SO_3H$ ①<br>\|<br>$CH_3$ |

| | | |
|---|---|---|
| $R^2$ | - H | - $CH_3$ |
| X | 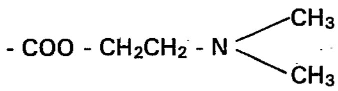 | 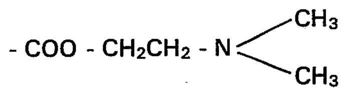 |
| $R^2$ | - H | - $CH_3$ |
| X | 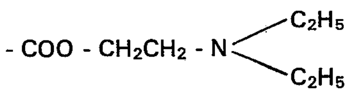 | 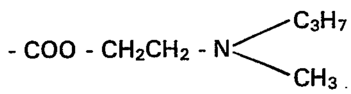 |
| $R^2$ | - H | - H |
| X | 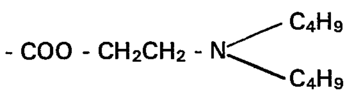 | 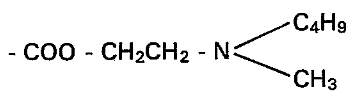 |
| $R^2$ | - H | - $CH_3$ |
| X | 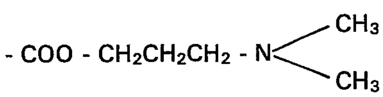 | 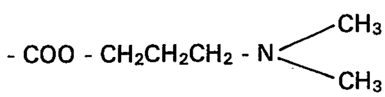 |
| $R^2$ | - H | - $CH_3$ |
| X | 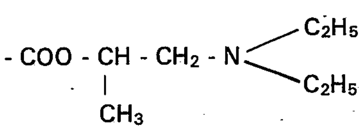 | 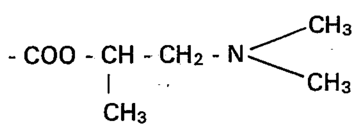 |
| $R^2$ | - H | - $CH_3$ |
| X | 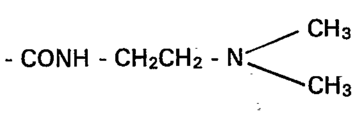 | 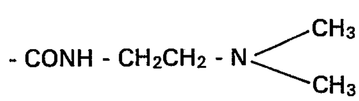 |
| $R^2$ | - H | - $CH_3$ |
| X | 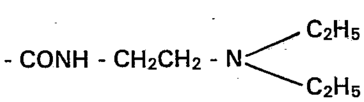 | 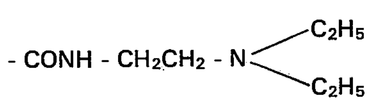 |
| $R^2$ | - H | - H |
| X | 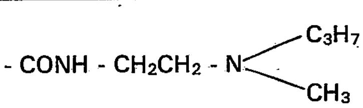 | 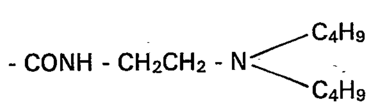 |

| | | |
|---|---|---|
| $R^2$ | - H | - H |
| X | 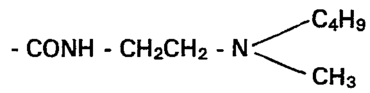 | 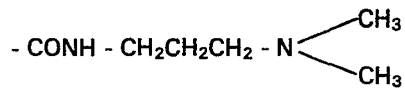 |

| | | |
|---|---|---|
| $R^2$ | - $CH_3$ | - H |
| X | 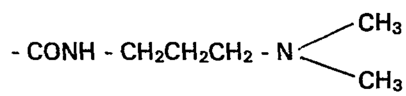 | 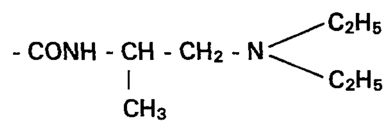 |

| | | | |
|---|---|---|---|
| $R^2$ | - $CH_3$ | - H | - H |
| X | 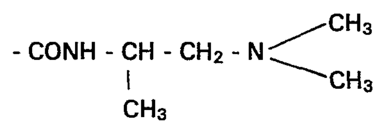 | 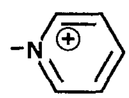 | 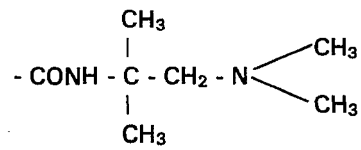 |

| | | | |
|---|---|---|---|
| $R^2$ | - $CH_3$ | - $CH_3$ | - H |
| X | 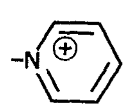 | 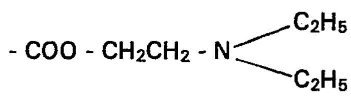 | 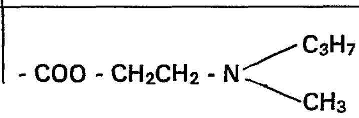 |

(1) Da N-Vinylamide unter sauren Bedingungen nicht beständig sind, müssen Ansätze, die saure Substanzen enthalten, vor der Polymerisation neutralisiert werden, beispielsweise mit den oben angegebenen anorganischen oder organischen Basen oder basischen Comonomeren.

Beispiele für bevorzugte Monomere, die Einheiten der Formel III in die erfindungsgemässen Copolymerisate einführen sind:
N-Vinylformamid,
N-Vinyl-N-methyl-formamid,
N-Vinyl-acetamid,
N-Vinyl-N-methyl-acetamid,
N-Vinylpyrrolidon,
Acrylsäure, Alkali- oder Ammoniumsalze der Acrylsäure,

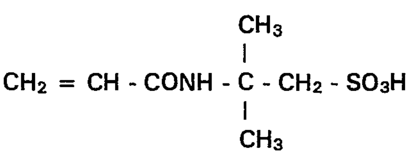

oder deren Alkali- oder Ammoniumsalze,

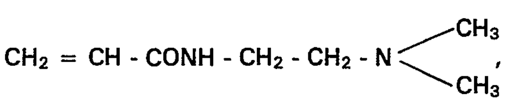, oder

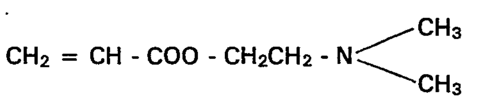 .

Die oben beschriebenen erfindungsgemässen Copolymerisate sind unseres Wissens neu mit Ausnahme derjenigen, in denen X eine Sulfogruppe, oder eine Sulfoalkyl-amidocarbonylgruppe, oder ein Salz einer dieser Gruppen bedeutet (vgl. US-Patent 4 048 077).

Die oben beschriebenen erfindungsgemässen Copolymerisate können auch zur Verdickung bzw. zum Gelieren von Säurelösungen eingesetzt werden, z.B. beim Verfahren der Drucksäuerung, wie es in unserer gleichzeitig eingereichten Patentanmeldung mit dem Titel «Wasserlösliche vernetzbare Polymerzusammensetzung, ihre Herstellung und ihre Verwendung» sowie in der prioritätsgleichen US-Patentanmeldung mit dem Titel «Watersoluble Cross-linkable Polymer Compositions Containing a Metal Compound, Their Preparation and Use», von Jeffery C. Dawson, Robert R. Mc-Daniels and Lawrence Sedillo beschrieben wird.

Die folgenden Ausführungsbeispiele veranschaulichen die Herstellung der erfindungsgemässen Copolymerisate.

Die Abkürzungen, die in den Beispielen und den Tabellen verwendet werden, haben die folgenden Bedeutungen:

AM: Acrylamid
VIMA: N-Vinyl-N-methylacetamid
AMPS: 2-Acrylamido-2-methylpropan-sulfonsäure wobei der Exponent
1) das Ammoniumsalz,
2) das Salz mit Dimethyl-β-hydroxyethylamin,
3) das Kaliumsalz und
4) das Natriumsalz bedeutet,
AS: Acrylsäure
MAS: Methacrylsäure
MAM: N-Methylol-acrylamid
VSSNa: Na-Salz der Vinylsulfonsäure
NMVA: N-Methylol-vinylacetamid
VIA: Vinylacetamid
VIFA: Vinylformamid
VIMFA: Vinyl-methyl-formamid
MVIFA: N-Methylol-vinylformamid
MVIA: N-Methylol-vinylacetamid
VPA: Vinylphosphonsäure
VIP: N-Vinylpyrrolidon
A: Ammoniumperoxidisulfat
B: Eine Kombination von Ammoniumperoxidisulfat + Dibuytlammonium-hydrochlorid +

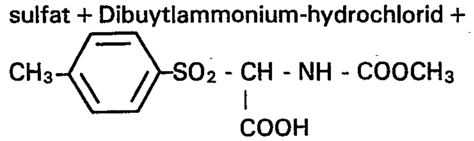

C: Azo-isobutyronitril.

*Beispiel 1*

In einem 2 l Kolben, ausgerüstet mit Wasserbad, Rührer, Rückflusskühler, Tropftrichter und Gaseinlass werden 400 ml entionisiertes Wasser und 17,7 ml einer 25 gew.%igen wässrigen Ammoniaklösung vorgelegt. Unter Einleiten eines schwachen Stickstoffstroms werden 9,3 g Acrylamido-methyl-propansulfonsäure und, sobald eine klare Lösung vorliegt, 60 g Acrylamid, 18,6 g N-Vinylpyrrolidon und 14,7 g N-Vinylformamid zugesetzt. Der pH-Wert der Lösung beträgt 6,5. Der Ansatz wird auf 50°C erwärmt und die Polymerisation durch Zusatz von 5 ml einer 20 gew.%igen wässrigen Lösung von Ammoniumperoxidisulfat ausgelöst. Nach einer Induktionsperiode von etwa 10 Min. startet die Reaktion, die Temperatur steigt auf 65°C an und die Mischung wird viskos. Der Ansatz wird anschliessend auf 80°C angewärmt und bei dieser Temperatur 2 Stunden lang gehalten. Nach Abkühlen auf Raumtemperatur erhält man eine hochviskose Lösung des Copolymerisats.

*Beispiel 2*

In einem 2 l Kolben, ausgerüstet mit Wasserbad, Rührer, Rückflusskühler, Tropftrichter und Gaseinleitungsrohr, werden 500 ml tert.-Butanol vorgelegt und 20 g AMPS unter Rühren darin suspensiert.

Dann werden 2,2 l Ammoniakgas eingeleitet und 65 g Acrylamid und 15 g N-Vinylformamid zugefügt. Unter Einleiten eines schwachen Stickstoffstroms wird die Mischung auf 50°C angewärmt und 1 g Azo-iso-butyronitril zugesetzt. Nach einer Induktionsperiode von einigen Minuten startet die Polymerisationsreaktion. Die Temperatur steigt dabei auf 81°C und das Polymerisat fällt aus. Die Reaktionsmischung wird noch weitere 2 Stunden auf 80°C gehalten, wobei eine viskose Suspension entsteht. Das Polymerisat kann durch Absaugen isoliert und bei 50°C im Vakuum getrocknet werden. Es ist jedoch auch möglich, das Polymerisat durch Abdestillieren des Lösungsmittels unter vermindertem Druck zu isolieren. Das erhaltene Polymerisat stellt ein weisses leichtes Pulver dar, das in Wasser leicht löslich ist. Der K-Wert nach Fikentscher ist 148.

Gemäss den vorstehenden Ausführungsbeispielen können auch die Copolymerisate der folgenden Tabellen 1 und 2 hergestellt werden:

*Tabelle I*

| Beispiel Nr. | AM | AS | AMPS | VIFA | VIMFA | VIMA | VIA | MAM | MVIA | MVIFA | weitere Zusätze | K-Wert | Reaktions-medium | Konzen-tration Gew.-% | pH Wert | Kataly-sator | Anfangs-tempera-tur °C |
|---|---|---|---|---|---|---|---|---|---|---|---|---|---|---|---|---|---|
| | Konzentration des Monomeren (Gew.-%) | | | | | | | | | | | | | | | | |
| 3 | 65 | 20 | | 15 | | | | | | | | 155 | Wasser | 18 | 5 | A | 50 |
| 4 | 65 | | 20 | 15 | | | | | | | | 129 | Wasser | 18 | 8.4 | A | 50 |
| 5 | 65 | 20 | | | | 15 | | | | | | 193 | Wasser | 18 | 4.8 | A | 50 |
| 6 | 65 | | 20 | | | 15 | | | | | | 149 | Wasser | 18 | 8 | A | 50 |
| 7 | 65 | 20 | | | 15 | | | | | | | 169 | Wasser | 18 | 4.8 | A | 50 |
| 8 | 65 | | 20 | | 15 | | | | | | | 124 | Wasser | 18 | 8.3 | A | 50 |
| 9 | 65 | 20 | | | | | 15 | | | | | 154 | Wasser | 18 | 4.9 | A | 50 |
| 10 | 65 | | 20 | | | | 15 | | | | | 122 | Wasser | 18 | 8.0 | A | 50 |
| 11 | 90.6 | | | 9.4 | | | | | | | | 130 | Wasser | 21 | 10 | B | 20 |
| 12 | 81.1 | | | 18.9 | | | | | | | | 111 | Wasser | 21 | 9.8 | B | 20 |
| 13 | 81.1 | | 9.4 | 9.4 | | | | | | | | 140 | Wasser | 21 | 7.8 | B | 20 |
| 14 | 65 | | 20 | | 15 | | | | | | | 208.5 | Wasser | 18 | 8.3 | A | 40 |
| 15 | 65 | 20 | | | 15 | | | | | | | 188 | Wasser | 18 | 4.9 | A | 40 |
| 16 | 65 | | 20 | 15 | | | | | | | | 199 | Wasser | 18 | 8.2 | A | 40 |
| 17 | 65 | 20 | | 15 | | | | | | | | 216.5 | Wasser | 18 | 4.9 | A | 40 |
| 18 | 50 | | | 50 | | | | | | | | 60.5 | Wasser | 25 | 4.0 | A | 23 |
| 19 | 20 | | | 80 | | | | | | | | 51 | Wasser | 25 | 4.2 | A | 23 |
| 20 | | | | 100 | | | | | | | | 25 | Wasser | 25 | 8 | A | 23 |
| 21 | 65 | 20 | | 15 | | | | | | | | 203 | Wasser | 18 | 7 | A | 40 |
| 22 | 65 | 20 | | 15 | | | | | | | | 201 | Wasser | 18 | 8 | A | 40 |
| 23 | 65 | 20 | | | | 15 | | | | | | 223 | Wasser | 18 | 7 | A | 40 |
| 24 | 65 | 20 | | | | 15 | | | | | | 223 | Wasser | 18 | 8 | A | 40 |
| 25 | 65 | | 20 | 15 | | | | | | | | 182 | Wasser | 18 | 7 | A | 40 |
| 26 | 65 | | 20 | | 15 | | | | | | | 187 | Wasser | 18 | 7 | A | 40 |
| 27 | 90.6 | | | | | | 9.4 | | | | Borax | 130 | Wasser | 21 | 10.1 | B | 35 |
| 28 | 81.2 | | 9.4 | | | | 9.4 | | | | Borax | 175 | Wasser | 21 | 7.9 | B | 35 |
| 29 | 65 | 20 | | 15 | | | | | | | | 164 | Wasser | 10 | 5 | A | 40 |
| 30 | 65 | 20 | | 15 | | | | | | | | 120 | Wasser | 5 | 5 | A | 40 |
| 31 | 71.7 | | 9.4 | 18.9 | | | | | | | | 136 | Wasser | 21 | 8.0 | B | 35 |
| 32 | 71.7 | 9.4 | | 18.9 | | | | | | | | 143 | Wasser | 21 | 8.3 | B | 35 |
| 33 | 65 | 15 | | 20 | | | | | | | | 188 | Wasser | 18 | 8 | A | 40 |
| 34 | 61 | 14 | | 25 | | | | | | | | 174 | Wasser | 18 | 8.2 | A | 40 |
| 35 | 56.8 | 13.2 | | 30 | | | | | | | | 171 | Wasser | 18 | 8 | A | 40 |
| 36 | 65 | 15 | | 20 | | | | | | | | 144 | Wasser | 10 | 8 | A | 40 |
| 37 | 61 | 14 | | 25 | | | | | | | | 139 | Wasser | 10 | 8 | A | 40 |
| 38 | 56.8 | 13.2 | | 30 | | | | | | | | 131 | Wasser | 10 | 8 | A | 40 |

*Tabelle I (Fortsetzung)*

| Beispiel Nr. | Konzentration des Monomeren (Gew.-%) AM | AS | AMPS | VIFA | VIMFA | VIMA | VIA | MAM | MVIA | MVIFA | weitere Zusätze | K-Wert | Reaktions-medium | Konzen-tration Gew.-% | pH Wert | Kataly-sator | Anfangs-tempera-tur °C |
|---|---|---|---|---|---|---|---|---|---|---|---|---|---|---|---|---|---|
| 39 | 56.8 | 13.2 | | | | | 30 | | | | | 139.5 | Wasser | 10 | 8.1 | A | 40 |
| 40 | 71.7 | 9.4 | | | | | 18.9 | | | | Borax | 188 | Wasser | 21.6 | 8.4 | B | 35 |
| 41 | 71.7 | | 9.4 | | | | 18.9 | | | | Borax | 149 | Wasser | 21.6 | 7.9 | B | 35 |
| 42 | 65 | | 20 | | 15 | | | | | | | 151 | Wasser | 10 | 7.3 | A | 40 |
| 43 | 65 | | 20 | 15 | | | | | | | | 143 | Wasser | 10 | 7 | A | 40 |
| 44 | 80 | | | 20 | | | | | | | Borax | 92 | Wasser | 21.6 | 7.5 | B | 35 |
| 45 | 70.5 | | 9.4 | 20.1 | | | | | | | Borax | 131 | Wasser | 21.6 | 7.5 | B | 35 |
| 46 | 60 | | 20 | 15 | | | | 5 | | | | 186 | Wasser | 17 | 4.8 | A | 40 |
| 47 | 60 | | 20 | 15 | | | | | 5 | | | 172.7 | Wasser | 17 | 4.8 | A | 40 |
| 48 | 60 | 20 | | 15 | | | | 5 | | | | 210.9 | Wasser | 17 | 4.8 | A | 40 |
| 49 | 60 | 20 | | 15 | | | | | | 5 | | 198 | Wasser | 17 | 4.8 | A | 40 |
| 50 | 60 | | 20 | 15 | | | | | | 5 | | 164 | Wasser | 17 | 4.7 | A | 40 |
| 51 | 51.8 | 13.2 | | 30 | | | | 5 | | | | 132.8 | Wasser | 10 | 4.8 | A | 40 |
| 52 | 51.8 | 13.2 | | 30 | | | | | 5 | | | 131.5 | Wasser | 10 | 4.8 | A | 40 |
| 53 | 51.8 | 13.2 | | 30 | | | | | | 5 | | 117.4 | Wasser | 10 | 4.8 | A | 40 |

*Tabelle II*

| Beispiel Nr. | Konzentration des Monomeren (Gew.-%) AM | AS | AMPS | VIFA | VIMFA | VIMA | VIA | MAM | MVIA | MVIFA | weitere Zusätze | K-Wert | Reaktions-medium | Konzen-tration Gew.-% | pH Wert | Kataly-sator | Anfangs-tempera-tur °C |
|---|---|---|---|---|---|---|---|---|---|---|---|---|---|---|---|---|---|
| 54 | 65 | 20 | | 15 | | | | | | | | 148 | tert.-Butanol | 20 | 9.1 | C | 50 |
| 55 | 65 | | 20 | 15 | | | | | | | | 178 | tert.-Butanol | 20 | 9.1 | C | 50 |
| 56 | 65 | 20 | | | | 15 | | | | | | 142 | tert.-Butanol | 20 | 9.0 | C | 50 |
| 57 | 65 | | 20 | | | 15 | | | | | | 176 | tert.-Butanol | 20 | 9.1 | C | 50 |
| 58 | 65 | 20 | | | 15 | | | | | | | 131.5 | tert.-Butanol | 20 | 9.2 | C | 50 |
| 59 | 65 | | 20 | | 15 | | | | | | | 157 | tert.-Butanol | 20 | 8.8 | C | 50 |
| 60 | 65 | 20 | | | | | 15 | | | | | 141 | tert.-Butanol | 20 | 8.9 | C | 50 |
| 61 | 60 | 20 | | 15 | | | | 5 | | | | 144.5 | tert.-Butanol | 17.5 | 9.0 | C | 50 |
| 62 | 60 | | 20 | 15 | | | | 5 | | | | 179.5 | tert.-Butanol | 17.5 | 9.6 | C | 50 |
| 63 | 60 | 20 | | 15 | | | | | | 5 | | 177 | tert.-Butanol | 17.5 | 9.3 | C | 50 |
| 64 | 60 | | 20 | 15 | | | | | | 5 | | 181.5 | tert.-Butanol | 17.5 | 8.9 | C | 50 |
| 65 | 60 | 20 | | 15 | | | | | 5 | | | 146.2 | tert.-Butanol | 17.5 | 8.6 | C | 50 |
| 66 | 60 | | 20 | 15 | | | | | 5 | | | 182.7 | tert.-Butanol | 17.5 | 8.9 | C | 50 |

*Beispiel 67*

In einem 500 ml Kolben, ausgerüstet mit Wasserbad, Rührer, Rückflusskühler, Tropftrichter und Gaseinlass wird eine Lösung von 0,23 g Sorbitan-monolaurat, 1,09 g Sorbitan-monostearat, 0,14 g Sorbitan-monooleat und 3,61 g Polyoxyethylen-Sorbitan-monostearat in 56,4 g einer geradkettigen Paraffinkohlenwasserstoff-Fraktion (Norpar 13 der Firma Exxon) vorgelegt. Unter Einleiten von Stickstoff wird die Lösung auf 60°C erwärmt.

In einem separaten Gefäss wird durch Auflösen von 33,6 g Acrylamid 5,4 g AMPS, 6,6 g N-Methyl-N-vinylacetamid, 6,6 g N-Vinylformamid und 7,8 g Vinyl-pyrrolidon in einer Mischung von 78,8 g entionisiertem Wasser und 2,6 ml 10 gew.%iger Natriumhydroxyd-Lösung eine Monomerenlösung hergestellt. Der pH-Wert dieser Lösung beträgt 7,4. Die Monomerenlösung wird mit 23 mg 2,2'-Azo-bis-(2-amidinopropan)-hydrochlorid versetzt und dann unter kräftigem Rühren zügig in die vorgelegte organische Emulgatorenlösung eingetropft, wobei eine milchig weisse Emulsion erhalten wird. Sobald die Temperatur des Ansatzes, wieder auf 60°C angestiegen ist, wird die Rührgeschwindigkeit auf etwa 60 Umdrehungen pro Min. reduziert. Nach einer Induktionszeit von 10 Minuten beginnt ein Temperaturanstieg. Bei etwa 80°C wird die Emulsion transparent, und die Rührgeschwindigkeit wird vergrössert. Die Temperatur steigt weiter bis auf max. 97°C. Nachdem der Ansatz wieder auf 80°C abgekühlt ist, wird bei dieser Temperatur noch 2 Stunden lang nachgerührt. Man erhält eine stabile Emulsion, die 30 Gew.-% aktives Polymerisat enthält.

*Beispiel 68*

In einem 1 l Polymerisationsgefäss werden 67 g einer deodorierten Kerosinfraktion mit einem Siedebereich von 190 bis 240°C (Exsol D, Verkaufsprodukt der Esso Chemie, Deutschland) auf eine Temperatur von 60°C erwärmt. Unter schwachem Rühren werden darin 0,27 g Sorbitan-monolaurat, 1,3 g Sorbitan-monostearat, 0,17 g Sorbitan-monooleat und 4,3 g Polyoxyethylen-Sorbitan-monostearat nacheinander gelöst. Unter weiterem schwachem Rühren und Einleiten eines Stickstoffstromes wird dann die Lösung auf 60°C erwärmt. In einem zweiten Gefäss werden in 94 ml Wasser, 6,4 g AMPS, 44,8 g Acrylamid, 9,2 g Vinylpyrrolidon und 10,6 g N-Vinyl-formamid unter Rühren aufgelöst. Die so erhaltene Lösung wird durch tropfenweise Zugabe von 10 gew.%iger wässriger Natriumhydroxydlösung auf einen pH-Wert von 8 bis 10 eingestellt und mit 0,1 g Ammoniumpersulfat versetzt. Die so erhaltene wässrige Monomerenlösung wird unter schnellem Rühren durch einen Tropftrichter in die vorgelegte organische Emulgatorlösung eingetropft und emulgiert. Die Polymerisationsreaktion startet nach etwa 30 Min. unter Anstieg der Temperatur. Im Verlauf von 15 Min. steigt die Temperatur auf 80 bis 90°C. Nach Abklingen der Polymerisation wird die Lösung noch weitere 2 Stunden bei 80°C gerührt. Man erhält eine stabile Emulsion mit einem Polymerisatgehalt von 30 Gew.-%. Das Molekulargewicht des Polymerisats beträgt 95.000.

*Beispiel 69*

1,85 g Sorbitan-monostearat werden in einem technischen isomeren Kohlenwasserstoffgemisch mit einem Siedebereich von 200 bis 240°C (Isopar M der Firma Exxon Corp.) gelöst. Diese Lösung wird in einem 2 l Reaktionskolben, ausgerüstet mit Rührer, Thermometer und Gaseinlassrohr, vorgelegt.

In einem separaten Gefäss wird dann eine Monomerenlösung hergestellt durch Auflösung von 25 g Acrylamid, 3,7 g Acrylsäure und 9,2 g N-Vinylformamid in 40 ml entionisiertem Wasser, und der pH-Wert dieser Lösung wird durch Zugabe einer wässrigen 20 gew.%igen Natriumhydroxydlösung auf 8,5 eingestellt. Unter kräftigem Rühren wird die wässrige Monomerenlösung langsam in die organische Sorbitan-monostearat-Lösung einlaufen gelassen und danach wird die Luft in dem Reaktionsgefäss durch Stickstoff verdrängt.

Nach Zusatz von 0,07 g 2,2'-Azo-bis-isobutyronitril, gelöst in Aceton, wird die Emulsion langsam unter Rühren auf 60°C erwärmt. Nach 2,5 Stunden ist die Polymerisation abgeschlossen, und man erhält eine stabile Emulsion des Copolymerisats.

*Beispiel 70*

67 g einer technischen isomeren Kohlenwasserstoff-Fraktion mit einem Siedebereich von 200 bis 240°C (Isopar M der Exxon Corp.) werden in einem 1 l Polymerisationsgefäss vorgelegt und auf 60°C erwärmt. Unter Rühren werden darin 0,27 g Sorbitan-monolaurat, 1,3 g Sorbitan-monostearat, 0,17 g Sorbitan-monooleat und 4,3 g Polyoxyethylen-Sorbitan-monostearat nacheinander gelöst.

In einem separaten Gefäss werden unter Rühren in 94 ml Wasser 12,8 g VIMA, 39,8 g Acrylamid, 12,0 g Vinylpyrrolidon und 6,6 g N-Vinylformamid gelöst. Der pH-Wert dieser Lösung wird durch tropfenweisen Zusatz von 10 gew.%iger wässriger Natriumhydroxydlösung auf 8 bis 10 eingestellt, und anschliessend werden 0,1 g Ammoniumpersulfat zugefügt. Diese Monomerenlösung wird dann unter starkem Rühren durch einen Tropftrichter in die vorgelegte organische Emulgatorlösung eingetropft und darin emulgiert. Die Polymerisationsreaktion startet nach etwa 30 Min. wobei im Verlauf von 15 Min. die Reaktionstemperatur auf 80 bis 90°C steigt. Nach Abklingen der Reaktion wird die Lösung noch 2 Stunden bei 80°C nachgerührt. Man erhält eine stabile Emulsion mit einem Polymerisatgehalt von 30 Gew.-%. Das Molekulargewicht des Polymerisats beträgt 95.000.

Gemäss den Ausführungsbeispielen 68 bis 70 können auch die Produkte der folgenden Tabelle III hergestellt werden, die ebenfalls als wertvolle Reibungsverminderer für wässrige Säuren eingesetzt werden können.

*Tabelle III*

| AM | AS | AMPS | VIFA | | η/rel. | K-Wert |
|---|---|---|---|---|---|---|
| 65 | 20 | | 15 | | 6,59 | 148 |
| 65 | 20 | | 15 | | 10,05 | 165,8 |
| 65 | 20 | | 15 | | 9,36 | 163 |
| 60 | | 20 | 15 | 5 NMA | 17,27 | 186 |
| 60 | | 20 | 15 | 5 NMVA | 11,97 | 172,7 |
| 60 | | 20 | 15 | 5 NMVF | 11,0 | 169,4 |
| 60 | | 20 | 15 | 5 NMVF | 7,0 | 151,2 |
| 60 | | 20 | 15 | 5 NMVF | 9,47 | 164 |
| 60 | 20 | | 15 | 5 NMA | 35,0 | 210,9 |
| 60 | 20 | | 15 | 5 NMVF | 24,43 | 193 |
| 51,8 | 13,2 | | 30 | 5 NMA | 4,66 | 132,8 |
| 51,8 | 13,2 | | 30 | 5 NMVA | 4,53 | 131,5 |
| 51,8 | 13,2 | | 30 | 5 NMVF | 3,41 | 117,4 |
| 51,8 | 13,2 | | 30 | 5 NMA | 12,16 | 173 |
| 51,8 | 13,2 | | 30 | 5 NMVA | 9,1 | 162,32 |
| 51,8 | 13,2 | | 30 | 5 NMVF | 9,3 | 163,16 |
| 60 | 20 | | 15 | 5 NMA | 31,44 | 207,4 |
| 51,8 | 13,2 | | 30 | 5 NMVF | 3,57 | 119,0 |
| 65 | | 10 | 5 | 20 VIP | 29,3 | 204 |

Alle Mengenangaben in Tabelle III sind Gewichtsteile

*Beispiel 71*

Um die reibungsvermindernde Eigenschaft der erfindungsgemässen Copolymerisate zu demonstrieren, wurden Strömungsversuche mit 7,5 gew.%-iger Salzsäure einmal ohne und einmal mit einem Zusatz des nach Ausführungsbeispiel 1 hergestellten erfindungsgemässen Copolymerisats durchgeführt.

Zur Durchführung des Experiments wurde eine Rohrschleife benutzt, in der das Fluid durch eine Reihe von Rohren bekannter Länge und bekannter Durchmesser mit einer bestimmten Durchflussgeschwindigkeit umgepumpt wird. Dabei werden an beiden Enden eines gegebenen, definierten Rohrabschnitts die hydromechanischen Drucke gemessen. Da man die Durchflussgeschwindigkeit und die Druckdifferenzen an dem betreffenden Rohrabschnitt kennt, ist es somit möglich, den Reibungsdruck verschiedener Fluids in Abhängigkeit von der Fliessgeschwindigkeit des Fluids in dem Rohr graphisch darzustellen.

Der erste Versuch wurde mit 208 l 7,5 gew.%iger Salzsäure, die 760 ml eines handelsüblichen Korrosionsinhibitors enthielt, durchgeführt, wobei Pumpgeschwindigkeiten von 38 bis 57 l/min bei Verwendung eines Rohres mit einem Innendurchmesser von 0,925 cm, 19 bis 170 l/min bei Verwendung eines Rohres mit einem Innendurchmesser von 1,25 cm und 19 bis 454 l/min unter Benutzung eines Rohres von 2,66 cm Innendurchmesser angewendet wurden. Nach dieser Versuchsserie wurden 224 g des in Ausführungsbeispiel 1 hergestellten Copolymerisats zu der 7,5 gew.%igen Salzsäure zugefügt entsprechend einer Copolymerisatskonzentration von 0,1 Gew.-% in der Säure. Mit dieser polymerisathaltigen Säure wurde das Durchflussexperiment wiederholt. Die in beiden Fällen an den Rohrabschnitten mit 0,925 cm, 1,25 cm und 2,66 cm innerem Durchmesser erhaltenen Messergebnisse sind in den Figuren 1, 2 bzw. 3 veranschaulicht worden.

*Beispiel 72*

Um die Säurelöslichkeit erfindungsgemässer Copolymerisate zu zeigen, wurden sie im Vergleich mit handelsüblichen Reibungsverminderern dem folgenden Versuch unterworfen:

In drei 225 ml Gefässe wurden je 200 ml 15 gew.%iger Salzsäure eingefüllt. Der Säure im Gefäss 1 wurden dann 2,0 g des erfindungsgemässen Polymerisats hergestellt nach Beispiel 2, im Gefäss 2 wurden 2,9 g einer handelsüblichen Reibungsverminderer-Emulsion LFR-1, und im Gefäss 3 wurden 3,2 g einer handelsüblichen Reibungsverminderer-Emulsion LFR-2 zugesetzt. Die Handelsprodukte LFR-1 und LFR-2 sind Copolymere von Acrylamid und Acrylsäure mit Molekulargewichten von 500.000 bis 2.000.000. Die Polymerisat-Gehalte der Emulsionen LFR-1 und LFR-2 sind unbekannt, es ist jedoch anzunehmen, dass Unterschiede zwischen den beiden Produkten bestehen in bezug auf die Menge des aktiven Copolymerisats, das Comonomerenverhältnis der Polymerisate und den Typ des Emulgiermittels. Die Proben in den drei Gefässen wurden 24 Std. lang auf 60°C erwärmt. Nach dieser Zeit war die Lösung im Gefäss 1, die das erfindungsgemässe Copolymerisat enthält, nach wie vor völlig klar, das Copolymerisat demnach vollständig löslich. In den Gefässen 2 und 3 dagegen hatten sich jeweils weisse Niederschlagspfropfen gebildet. Die ausgeschiedenen Festkörper wurden abgesaugt und mit Wasser und anschliessend mit Methanol ausgewaschen. Danach wurden die Filterrückstände im Vakuum bei 40°C über Nacht getrocknet. Die erhaltenen Mengen sind der folgenden Tabelle IV zu entnehmen.

*Tabelle IV*

| Probe | Anfangsgewicht | Gewicht der unlöslichen Abscheidung | % unlösliche Abscheidung |
|---|---|---|---|
| Erfindungsgemässes Copolymer | 2,0 g | 0 | 0 |
| LFR-1 Emulsion | 2,90 g* | 1,15 g | 39,6 g |
| LFR-2 Emulsion | 3,20 g* | 0,82 g | 25,6 g |

* Das angegebene Gewicht bezieht sich in diesen Fällen auf Emulsion, nicht auf reines Polymerisat

*Beispiel 73*

Für die Drucksäuerung wird die Erdgasbohrung in West Texas ausgewählt. Die Bohrung hat ein Produktionsintervall zwischen einer Tiefe von 1100 bis 1120 Meter. Die Sohlen-Temperatur in diesem Intervall beträgt 43°C, die Durchlässigkeit der Formation durchschnittlich 0,15 md (millidarcy). Die Rohrweite beträgt 6,0 cm; die spontane Produktivität der Bohrung beträgt vor der Behandlung ca. 168 $m^3$ Gas pro Tag.

Das einzusetzende Drucksäuerungsfluid wird hergestellt, indem man zunächst 3785 l 28 gew.%ige Salzsäure mit 35960 l frischem Wasser mischt und dann der erhaltenen verdünnten Säure 79,5 l (0,2 Gew.-%) der nach Beispiel 3 hergestellten Polymeren-Emulsion zufügt. Das so erhaltene Fluid wird mit einer Geschwindigkeit von 1589,8 l/min unter einem Druck von 310,5 bar in die Bohrung eingepresst. Nach 25 Minuten ist das Einpumpen beendet und die Bohrung wird verschlossen, um der Säure Gelegenheit zu geben, mit dem Gestein zu reagieren.

Nach 60 Minuten wird der Druck am Kopf der Bohrung entlastet und die Förderung wiederhergestellt. Eine Messung der Förderrate ergibt eine wesentliche Zunahme der Produktivität der Bohrung.

**Patentansprüche für die Vertragsstaaten:**
BE, CH, DE, FR, LI, NL

1. Verfahren zur Stimulierung von Erdgas- und Erdölbohrungen durch Drucksäuerung mit einer Säurelösung, dadurch gekennzeichnet, dass die Säure 0,06 bis 0,12 Gew.-% eines in Wasser oder wässrigen Säuren löslichen Copolymerisat enthält, das in seinem Makromolekül mindestens 5 Gew.-% von Einheiten, die eine Formylaminogruppe der Formel

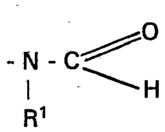

aufweisen,

worin $R^1$ Wasserstoff, Methyl oder Hydroxymethyl ist, und mindestens 10 Gew.-% von Einheiten, die eine Aminocarbonylgruppe der Formel

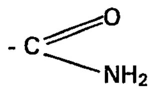

aufweisen,

enthält.

2. Verfahren nach Anspruch 1, dadurch gekennzeichnet, dass sich das Copolymerisat in statistischer Verteilung zu 5 bis 50 Gew.-% aus Einheiten der Formel I

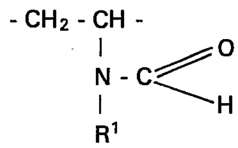 (I)

10 bis 95 Gew.-% aus Einheiten der Formel II

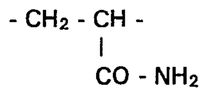 (II) und

0 bis 85 Gew.-% aus Einheiten der Formel III

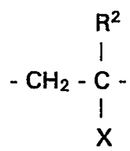 (III)

zusammensetzt,
worin $R^1$ für Wasserstoff, Methyl oder Hydroxymethyl und $R^2$ für Wasserstoff oder Methyl steht und X Cyan, Carboxyl, oder dessen Alkali oder Ammoniumsalze, Alkoxycarbonyl mit 1 bis 6 Kohlenstoffatomen, Hydroxyalkoxycarbonyl mit 1 bis 3 Kohlenstoffatomen; N-Methylolamidocarbonyl der Formel $HOCH_2NH$-CO-, dessen Methylolgruppe gegebenenfalls mit Alkanolen mit 1 bis 4 Kohlenstoffatomen veräthert sein kann; Alkanoylamino mit bis zu 4 Kohlenstoffatomen, das gegebenenfalls durch Methylol oder Alkyl mit 1 bis 4 Kohlenstoffatomen N-substituiert sein kann; Pyrrolidonyl-(1); Phenyl; Pyridinium; die Sulfonsäuregruppe; Sulfoalkylamidocarbonyl mit 1 bis 4 Kohlenstoffatomen; die Phosphonsäuregruppe, wobei Sulfonsäure und Phosphonsäuregruppen auch als Alkali- oder Ammoniumsalze vorliegen können; einen Rest der Formel IV

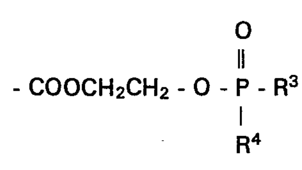 (IV)

worin $R^3$ und $R^4$ gleich oder verschieden sind und für Alkyl mit 1 bis 4 Kohlenstoffatomen stehen; einen Rest der Formel V

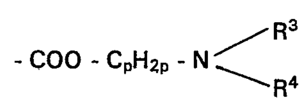 (V)

worin $R^3$ und $R^4$ die oben angegebenen Bedeutun-

gen haben und p für eine Zahl von 1 bis 4 steht; oder einen Rest der Formel VI

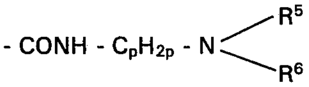 (VI)

worin $R^5$ und $R^6$ gleich oder verschieden sind und für Alkyl mit 1 bis 4 Kohlenstoffatomen stehen und p für eine Zahl von 1 bis 4 steht; sowie die den Formeln V und VI entsprechenden quaternisierten Gruppen bedeutet.

3. Verfahren gemäss den Ansprüchen 1 und 2, dadurch gekennzeichnet, dass sich das Copolymerisat aus
5 bis 30 Gew.-% von Einheiten der Formel I,
50 bis 80 Gew.-% von Einheiten der Formel II und
1 bis 60 Gew.-% von Einheiten der Formel III zusammensetzt.

4. Verfahren gemäss den Ansprüchen 1 bis 3, dadurch gekennzeichnet, dass ein Copolymerisat eingesetzt wird, in dem X Carboxyl, die Sulfonsäuregruppe, 3-Sulfo-2-methyl-propyl-(2)-amidocarbonyl der Formel

$CH_3$
I
$- CONH - C - CH_2 - SO_3H$
I
$CH_3$

Alkanoylamino mit 1 bis 4 Kohlenstoffatomen, das gegebenenfalls mit Methylol oder Alkyl mit 1 bis 4 Kohlenstoffatomen N-substituiert sein kann, Pyrrolidonyl-(1) oder einen Rest der obenangegebenen und definierten Formeln V oder VI bedeutet, wobei jede Säuregruppe auch als Natrium-, Kalium- oder Ammoniumsalz vorliegen kann.

5. Verfahren gemäss den Ansprüchen 1 bis 4, dadurch gekennzeichnet, dass ein Copolymerisat eingesetzt wird mit einem K-Wert zwischen 25 und 250 entsprechend einem Molekulargewicht von 20 000 bis $15 \cdot 10^6$.

6. Wasserlösliches Copolymerisat, das sich in statistischer Verteilung zu

5 bis 50 Gew.-% aus Einheiten der Formel I

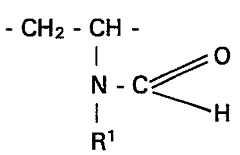 (I)

10 bis 95 Gew.-% aus Einheiten der Formel II

$- CH_2 - CH -$
I
$CO - NH_2$ (II) und

0 bis 85 Gew.-% aus Einheiten der Formel III

$R^2$
I
$- CH_2 - C -$ (III)
I
X

zusammensetzt,
worin $R^1$ für Wasserstoff, Methyl oder Hydroxymethyl und $R^2$ für Wasserstoff oder Methyl steht und X Cyan, Carboxyl, oder dessen Alkali oder Ammoniumsalze, Alkoxycarbonyl mit 1 bis 6 Kohlenstoffatomen, Hydroxyalkoxycarbonyl mit 1 bis 3 Kohlenstoffatomen; N-Methylolamidocarbonyl der Formel $HOCH_2NH$-CO-, dessen Methylolgruppe gegebenenfalls mit Alkanolen mit 1 bis 4 Kohlenstoffatomen veräthert sein kann; Alkanoylamino mit 1 bis zu 4 Kohlenstoffatomen, das gegebenenfalls durch Methylol oder Alkyl mit 1 bis 4 Kohlenstoffatomen N-substituiert sein kann; Pyrrolidonyl-(1); Phenyl; Pyridinium; die Phosphonsäuregruppe oder deren Alkali- oder Ammoniumsalze; einen Rest der Formel IV

O
II
$- COOCH_2CH_2 - O - P - R^3$ (IV)
I
$R^4$

worin $R^3$ und $R^4$ gleich oder verschieden sind und für Alkyl mit 1 bis 4 Kohlenstoffatomen stehen; einen Rest der Formel V

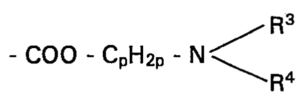 (V)

worin $R^3$ und $R^4$ die oben angegebenen Bedeutungen haben und p für eine Zahl von 1 bis 4 steht; oder einen Rest der Formel VI

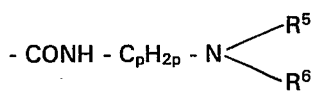 (VI)

worin $R^5$ und $R^6$ gleich oder verschieden sind und für Alkyl mit 1 bis 4 Kohlenstoffatomen stehen und p für eine Zahl von 1 bis 4 steht; sowie die den Formeln V und VI entsprechenden quaternisierten Gruppen bedeutet.

7. Wasserlösliches Copolymerisat gemäss Anspruch 6, dadurch gekennzeichnet, dass es sich aus
5 bis 30 Gew.-% von Einheiten der Formel I,
50 bis 80 Gew.-% von Einheiten der Formel II und
1 bis 60 Gew.-% von Einheiten der Formel III zusammensetzt.

8. Wasserlösliches Copolymerisat gemäss den Ansprüchen 6 und 7, dadurch gekennzeichnet, dass X Carboxyl, Alkanoylamino mit 1 bis 4 Kohlenstoffatomen, das gegebenenfalls mit Methylol oder Alkyl mit 1 bis 4 Kohlenstoffatomen N-substituiert sein kann, Pyrrolidonyl-(1) oder einen Rest der obenangegebenen und definierten Formeln V oder VI bedeutet, wobei die Carboxylgruppe auch als Natrium-, Kalium- oder Ammoniumsalz vorliegen kann.

9. Wasserlösliches Copolymerisat gemäss den Ansprüchen 6 bis 8, dadurch gekennzeichnet, dass es einen K-Wert zwischen 25 und 250 entsprechend einem Molekulargewicht von 20 000 bis $15 \cdot 10^6$ aufweist.

10. Wässrige Copolymer-Lösung enthaltend 0,5 bis 6 Gew.-% eines Copolymerisats gemäss den Ansprüchen 6 bis 9.

11. Wasser-in-Öl-Emulsion, die als wässrige Phase eine Copolymer-Lösung eines Copolymerisats gemäss den Ansprüchen 6 bis 9 aufweist.

**Patentansprüche für den Vertragsstaat:** AT

1. Verfahren zur Stimulierung von Erdgas- und Erdölbohrungen durch Drucksäuerung mit einer Säurelösung, dadurch gekennzeichnet, dass die Säure 0,06 bis 0,12 Gew.-% eines in Wasser oder wässrigen Säuren löslichen Copolymerisat enthält, das in seinem Makromolekül mindestens 5 Gew.-% von Einheiten, die eine Formylaminogruppe der Formel

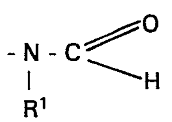

aufweisen,

worin $R^1$ Wasserstoff, Methyl oder Hydroxymethyl ist, und mindestens 10 Gew.-% von Einheiten, die eine Aminocarbonylgruppe der Formel

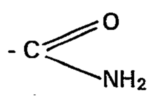

aufweisen,

enthält.

2. Verfahren nach Anspruch 1, dadurch gekennzeichnet, dass sich das Copolymerisat in statistischer Verteilung zu

5 bis 50 Gew.-% aus Einheiten der Formel I

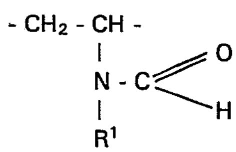

(I)

10 bis 95 Gew.-% aus Einheiten der Formel II

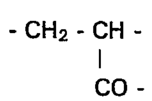

(II) und

0 bis 85 Gew.-% aus Einheiten der Formel III

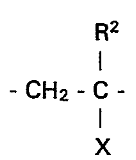

(III)

zusammensetzt,

worin $R^1$ für Wasserstoff, Methyl oder Hydroxymethyl und $R^2$ für Wasserstoff oder Methyl steht und X Cyan, Carboxyl, oder dessen Alkali oder Ammoniumsalze, Alkoxycarbonyl mit 1 bis 6 Kohlenstoffatomen, Hydroxyalkoxycarbonyl mit 1 bis 3 Kohlenstoffatomen; N-Methylolamidocarbonyl der Formel $HOCH_2NH\text{-}CO\text{-}$, dessen Methylolgruppe gegebenenfalls mit Alkanolen mit bis zu 4 Kohlenstoffatomen veräthert sein kann; Alkanoylamino mit 1 bis 4 Kohlenstoffatomen, das gegebenenfalls durch Methylol oder Alkyl mit 1 bis 4 Kohlenstoffatomen N-substituiert sein kann; Pyrrolidonyl-(1); Phenyl; Pyridinium; die Sulfonsäuregruppe; Sulfoalkylamidocarbonyl mit 1 bis 4 Kohlenstoffatomen; die Phosphonsäuregruppe, wobei Sulfonsäure und Phosphonsäuregruppen auch als Alkali- oder Ammoniumsalze vorliegen können; einen Rest der Formel IV

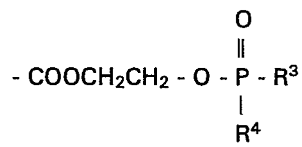

(IV)

worin $R^3$ und $R^4$ gleich oder verschieden sind und für Alkyl mit 1 bis 4 Kohlenstoffatomen stehen; einen Rest der Formel V

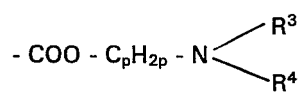

(V)

worin $R^3$ und $R^4$ die oben angegebenen Bedeutungen haben und p für eine Zahl von 1 bis 4 steht; oder einen Rest der Formel VI

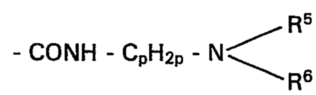

(VI)

worin $R^5$ und $R^6$ gleich oder verschieden sind und für Alkyl mit 1 bis 4 Kohlenstoffatomen stehen und p für eine Zahl von 1 bis 4 steht; sowie die den Formeln V und VI entsprechenden quaternisierten Gruppen bedeutet.

3. Verfahren gemäss den Ansprüchen 1 und 2, dadurch gekennzeichnet, dass sich das Copolymerisat aus
5 bis 30 Gew.-% von Einheiten der Formel I,
50 bis 80 Gew.-% von Einheiten der Formel II und
1 bis 60 Gew.-% von Einheiten der Formel III zusammensetzt.

4. Verfahren gemäss den Ansprüchen 1 bis 3, dadurch gekennzeichnet, dass ein Copolymerisat eingesetzt wird, in dem X Carboxyl, die Sulfonsäuregruppe, 3-Sulfo-2-methyl-propyl-(2)-amidocarbonyl der Formel

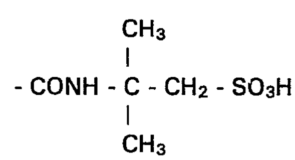

Alkanoylamino mit 1 bis 4 Kohlenstoffatomen, das gegebenenfalls mit Methylol oder Alkyl mit 1 bis 4 Kohlenstoffatomen N-substituiert sein kann, Pyrrolidonyl-(1) oder einen Rest der obenangegebenen und definierten Formeln V oder VI bedeutet, wobei jede Säuregruppe auch als Natrium-, Kalium- oder Ammoniumsalz vorliegen kann.

5. Verfahren gemäss den Ansprüchen 1 bis 4, dadurch gekennzeichnet, dass ein Copolymerisat eingesetzt wird mit einem K-Wert zwischen 25 und 250 entsprechend einem Molekulargewicht von 20 000 bis $15 \cdot 10^6$.

6. Verfahren zur Herstellung eines wasserlöslichen Copolymerisats, das sich in statistischer Verteilung zu

5 bis 50 Gew.-% aus Einheiten der Formel I

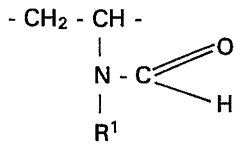

(I)

10 bis 95 Gew.-% aus Einheiten der Formel II

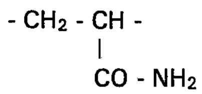

(II) und

0 bis 85 Gew.-% aus Einheiten der Formel III

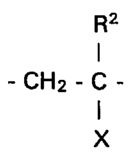

(III)

zusammensetzt,
worin $R^1$ für Wasserstoff, Methyl oder Hydroxymethyl und $R^2$ für Wasserstoff oder Methyl steht und X Cyan, Carboxyl, oder dessen Alkali oder Ammoniumsalze, Alkoxycarbonyl mit 1 bis 6 Kohlenstoffatomen, Hydroxyalkoxycarbonyl mit 1 bis 3 Kohlenstoffatomen; N-Methylolamidocarbonyl der Formel $HOCH_2NH$-CO-, dessen Methylolgruppe gegebenenfalls mit Alkanolen mit 1 bis 4 Kohlenstoffatomen veräthert sein kann; Alkanoylamino mit 1 bis 4 Kohlenstoffatomen, das gegebenenfalls durch Methylol oder Alkyl mit 1 bis 4 Kohlenstoffatomen N-substituiert sein kann; Pyrrolidonyl-(1); Phenyl; Pyridinium; die Phosphonsäuregruppe oder deren Alkali- oder Ammoniumsalze; einen Rest der Formel IV

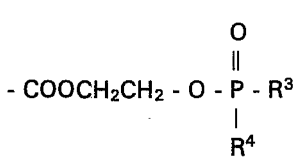

(IV)

worin $R^3$ und $R^4$ gleich oder verschieden sind und für Alkyl mit 1 bis 4 Kohlenstoffatomen stehen; einen Rest der Formel V

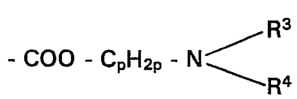

(V)

worin $R^3$ und $R^4$ die oben angegebenen Bedeutungen haben und p für eine Zahl von 1 bis 4 steht; oder einen Rest der Formel VI

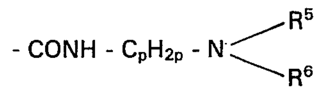

(VI)

worin $R^5$ und $R^6$ gleich oder verschieden sind und für Alkyl mit 1 bis 4 Kohlenstoffatomen stehen und p für eine Zahl von 1 bis 4 steht; sowie die den Formeln V und VI entsprechenden quaternisierten Gruppen bedeutet, dadurch gekennzeichnet, dass man 5 bis 50 Gew.-% eines gegebenenfalls N-substituierten Vinylformamids der Formel Ia

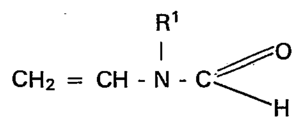

(Ia)

10 bis 95 Gew.-% Acrylamid und 0 bis 85 Gew.-% eines ethylenisch ungesättigten Monomers der Formel IIIa

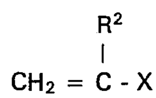

(IIIa)

worin $R^1$, $R^2$ und X die oben angegebenen Bedeutungen haben, in Wasser, einem organischen Lösungsmittel oder in einer Emulsion in an sich bekannter Weise copolymerisiert.

7. Verfahren gemäss Anspruch 6 zur Herstellung eines wasserlöslichen Copolymerisats, dadurch gekennzeichnet, dass man 5 bis 30 Gew.-% des gegebenenfalls N-substituierten Vinylformamids der Formel Ia, 50 bis 80 Gew.-% Acrylamid und 1 bis 60 Gew.-% des ethylenisch ungesättigten Monomers der Formel IIIa copolymerisiert.

8. Verfahren gemäss den Ansprüchen 6 und 7 zur Herstellung eines wasserlöslichen Copolymerisats, dadurch gekennzeichnet, dass ein ethylenisch ungesättigtes Monomer der Formel IIIa eingesetzt wird, in dem X Carboxyl, Alkanoylamino mit 1 bis 4 Kohlenstoffatomen, das gegebenenfalls mit Methylol oder Alkyl mit 1 bis 4 Kohlenstoffatomen N-substituiert sein kann, Pyrrolidonyl-(1) oder einen Rest der oben angegebenen und definierten Formeln V oder VI bedeutet, wobei die Carboxylgruppe auch als Natrium-, Kalium- oder Ammoniumsalz vorliegen kann.

9. Verfahren gemäss den Ansprüchen 6 bis 8 zur Herstellung eines wasserlöslichen Copolymerisats, dadurch gekennzeichnet, dass man die Polymerisation bis zu einem K-Wert zwischen 25 und 250 entsprechend einem Molekulargewicht von 20 000 bis $15 \cdot 10^6$ führt.

10. Verfahren gemäss den Ansprüchen 6 bis 9, dadurch gekennzeichnet, dass man das erhaltene Copolymerisat in Wasser zu einer 0,5 bis 6 gew.-%igen Lösung auflöst.

**Claims for the Contracting States:**
BE, CH, DE, FR, LI, NL

1. Process for the stimulation of natural gas and petroleum wells by fracture acidizing with an acidic solution characterised in that the acidic solution contains from 0.06 to 0.12% by weight of a copolymer soluble in water or aqueous acids and which comprises in the macromolecule, at least 5% by weight of units containing a formylamino group of the formula

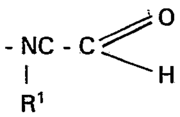

wherein $R^1$ is hydrogen, methyl or hydroxymethyl, and at least 10% by weight of units containing an aminocarbonyl group of the formula

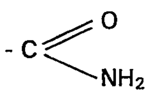

2. The process according to claim 1 characterised in that the copolymer comprises in a statistical distribution, 5 to 50% by weight of units of the formula I

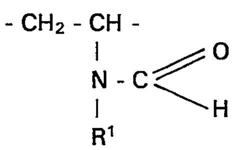

(I)

10 to 95% by weight of units of the formula II

$$-CH_2-\underset{\underset{CO-NH_2}{|}}{CH}- \qquad (II)$$

and 0 to 85% by weight of units of the formula III

$$-CH_2-\overset{\overset{R^2}{|}}{\underset{\underset{X}{|}}{C}}- \qquad (III)$$

wherein
$R^1$ is hydrogen, methyl or hydroxymethyl,
$R^2$ is hydrogen or methyl, and
X is cyano, carboxyl or its alkali or ammonium salts, alkoxycarbonyl having 1 to 6 carbon atoms, hydroxyalkoxycarbonyl having 1 to 3 carbon atoms, N-methylolamidocarbonyl, of the formula $HOCH_2$-NH-CO-, the methylol group of which may optionally be etherified with alkanols having 1 to 4 carbon atoms, alkanoylamino having up to 4 carbon atoms, which may optionally be N-substituted by methylol or alkyl having 1 to 4 carbon atoms, pyrrolidonyl-(1); phenyl; pyridinium; the sulphonic acid group; sulphoalkylamidocarbonyl having 1 to 4 carbon atoms; the phosphonic acid group, it being also possible for the sulphonic acid group and the phosphonic acid group to be present as alkali or ammonium salts; a radical of the formula IV

$$-COO-CH_2CH_2-O-\overset{\overset{O}{\|}}{\underset{\underset{R^4}{|}}{P}}-R^3 \qquad (IV)$$

wherein $R^3$ and $R^4$ are the same or different and each is alkyl having 1 to 4 carbon atoms, a radical of the formula V

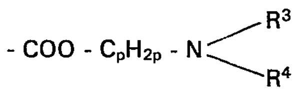

(V)

wherein $R^3$ and $R^4$ have the above meanings and p is a number from 1 to 4; or a radical of the formula VI

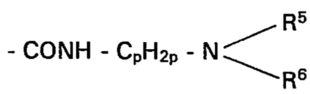

(VI)

wherein $R^5$ and $R^6$ are the same or different and each is alkyl having 1 to 4 carbon atoms and p is a number from 1 to 4; as well as the quaternized groups corresponding to formulas V and VI.

3. The process according to claims 1 and 2 characterised in that the copolymer comprises
5 to 30% by weight of units of formula I,
50 to 80% by weight of units of formula II,
and 1 to 60% by weight of units of formula III.

4. The process according to claims 1 to 3, characterised in that a copolymer is used wherein X is carboxyl, the sulphonic acid group, 3-sulpho-2-methyl-propyl-(2)-amidocarbonyl of the formula

$$-CONH-\overset{\overset{CH_3}{|}}{\underset{\underset{CH_3}{|}}{C}}-CH_2-SO_3H$$

alkanoylamino having 1 to 4 carbon atoms unsubstituted or N-substituted with methylol or alkyl having 1 to 4 carbon atoms, pyrrolidonyl-(1), or a radical of formula V or VI mentioned and defined above, it being possible for each acid group to be present as sodium-, potassium- or ammonium salts.

5. The process according to claims 1 to 4, characterised in that a copolymer is used which has a K-value of between about 25 to 250 corresponding to molecular weights of between 20,000 and $15 \times 10^6$.

6. Water-soluble copolymer which, in a statistical distribution, is composed of 5 to 50% by weight of units of formula I

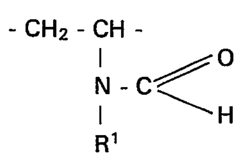

(I)

10 to 95% by weight of units of formula II

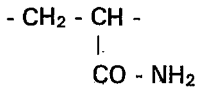 (II)

and 0 to 85% by weight of units of formula III

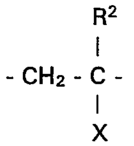 (III)

wherein $R^1$ stands for hydrogen, methyl or hydroxymethyl, $R^2$ stands for hydrogen or methyl and X stands for cyano, carboxyl, or its alkali or ammonium salts, alkoxycarbonyl having 1 to 6 carbon atoms, hydroxyalkoxycarbonyl having 1 to 3 carbon atoms, N-methylolamidocarbonyl of the formula $HOCH_2$-NH-CO-, the methylol group of which may optionally be etherified with alkanols having 1 to 4 carbon atoms, alkanoylamino having 1 to 4 carbon atoms, which may optionally be N-substituted with methylol or alkyl having 1 to 4 carbon atoms, pyrrolidonyl-(1); phenyl; pyridinium; the phosphonic acid group, or alkali or ammonium salts of the phosphonic acid group; a radical of the formula IV

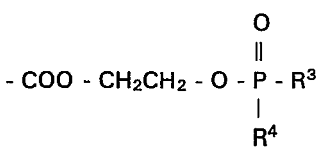 (IV)

wherein $R^3$ and $R^4$ are the same or different and represent alkyl having 1 to 4 carbon atoms, a radical of the formula V

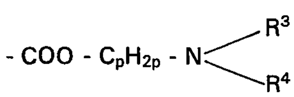 (V)

wherein $R^3$ and $R^4$ have the above meanings and p is a number from 1 to 4; or a radical of the formula VI

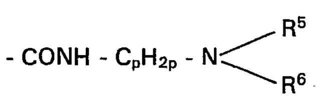 (VI)

wherein $R^5$ and $R^6$ are the same or different and each is alkyl having 1 to 4 carbon atoms, and p is a number from 1 to 4; as well as the quaternized groups corresponding to the formulas V and VI.

7. Water-soluble copolymer according to claim 6, characterised in that it comprises
5 to 30% by weight of units of formula I,
50 to 80% by weight of units of formula II,
and 1 to 60% by weight of units of formula III.

8. Water-soluble copolymer according to claims 6 and 7, characterised in that X is carboxyl, alkanoylamino having 1 to 4 carbon atoms unsubstituted or N-substituted with methylol or alkyl having 1 to 4 carbon atoms, pyrrolidonyl-(1), or a radical of formula V or VI, mentioned and defined above, it being possible for the carboxyl group to be present as sodium-, potassium- or ammonium salt.

9. Water-soluble copolymer according to claims 6 to 8, characterised in that it has a K-value of between 25 and 250 corresponding to a molecular weight of between 20,000 and $15 \times 10^6$.

10. Aqueous copolymer solution containing 0.5 to 6 percent by weight of a copolymer according to claims 6 to 9.

11. Water in oil emulsion having as its aqueous phase a solution of the copolymer according to claims 6 to 9.

**Claims for the Contracting State:** AT

1. Process for the stimulation of natural gas and petroleum wells by fracture acidizing with an acidic solution characterised in that the acidic solution contains from 0.06 to 0.12% by weight of a copolymer soluble in water or aqueous acids and which comprises in the macromolecule, at least 5% by weight of units containing a formylamino group of the formula

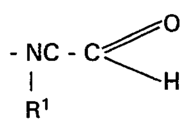

wherein $R^1$ is hydrogen, methyl or hydroxymethyl, and at least 10% by weight of units containing an aminocarbonyl group of the formula

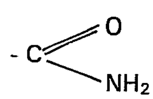

2. The process according to claim 1 characterised in that the copolymer comprises in a statistical distribution, 5 to 50% by weight of units of the formula I

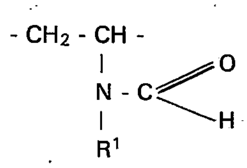 (I)

10 to 95% by weight of units of the formula II

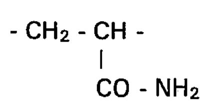 (II)

and 0 to 85% by weight of units of the formula III

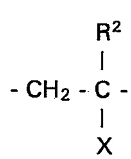 (III)

wherein
$R^1$ is hydrogen, methyl or hydroxymethyl,
$R^2$ is hydrogen or methyl, and

X is cyano, carboxyl or its alkali or ammonium salts, alkoxycarbonyl having 1 to 6 carbon atoms, hydroxyalkoxycarbonyl having 1 to 3 carbon atoms, N-methylolamidocarbonyl, of the formula $HOCH_2$-NH-CO-, the methylol group of which may optionally be etherified with alkanols having 1 to 4 carbon atoms, alkanoylamino having up to 4 carbon atoms, which may optionally be N-substituted by methylol or alkyl having 1 to 4 carbon atoms, pyrrolidonyl-(1); phenyl; pyridinium; the sulphonic acid group; sulphoalkylamidocarbonyl having 1 to 4 carbon atoms; the phosphonic acid group, it being also possible for the sulphonic acid group and the phosphonic acid group to be present as alkali or ammonium salts; a radical of the formula IV

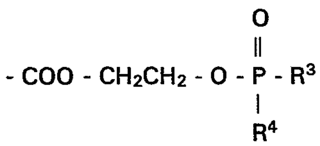 (IV)

wherein $R^3$ and $R^4$ are the same or different and each is alkyl having 1 to 4 carbon atoms, a radical of the formula V

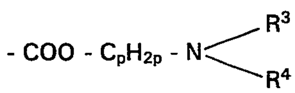 (V)

wherein $R^3$ and $R^4$ have the above meanings and p is a number from 1 to 4; or a radical of the formula VI

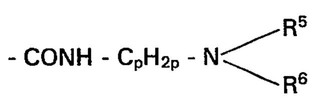 (VI)

wherein $R^5$ and $R^6$ are the same or different and each is alkyl having 1 to 4 carbon atoms and p is a number from 1 to 4; as well as the quaternized groups corresponding to formulas V and VI.

3. The process according to claims 1 and 2 characterised in that the copolymer comprises
5 to 30% by weight of units of formula I,
50 to 80% by weight of units of formula II,
and 1 to 60% by weight of units of formula III.

4. The process according to claims 1 to 3, characterised in that a copolymer is used wherein X is carboxyl, the sulphonic acid group, 3-sulpho-2--methyl-propyl-(2)-amidocarbonyl of the formula

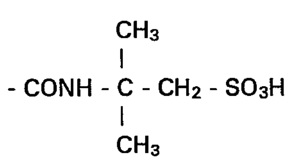

alkanoylamino having 1 to 4 carbon atoms unsubstituted or N-substituted with methylol or alkyl having 1 to 4 carbon atoms, pyrrolidonyl-(1), or a radical of formula V or VI mentioned and defined above, it being possible for each acid group to be present as sodium-, potassium- or ammonium salts.

5. The process according to claims 1 to 4, characterised in that a copolymer is used which has a K-value of between about 25 to 250 corresponding to molecular weights of between 20,000 and $15 \times 10^6$.

6. Process for preparing a water-soluble copolymer which, in a statistical distribution, is composed of 5 to 50% by weight of units of formula I

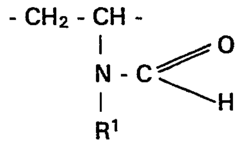 (I)

10 to 95% by weight of units of formula II

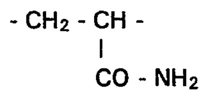 (II)

and 0 to 85% by weight of units of formula III

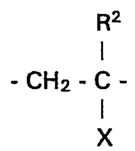 (III)

wherein $R^1$ stands for hydrogen, methyl or hydroxymethyl, $R^2$ stands for hydrogen or methyl and X stands for cyano, carboxyl, or its alkali or ammonium salts, alkoxycarbonyl having 1 to 6 carbon atoms, hydroxyalkoxycarbonyl having 1 to 3 carbon atoms, N-methylolamidocarbonyl of the formula $HOCH_2$-NH-CO-, the methylol group of which may optionally be etherified with alkanols having 1 to 4 carbon atoms, alkanoylamino having 1 to 4 carbon atoms, which may optionally be N-substituted with methylol or alkyl having 1 to 4 carbon atoms, pyrrolidonyl-(1); phenyl; pyridinium; the phosphonic acid group, or alkali or ammonium salts of the phosphonic acid group; a radical of the formula IV

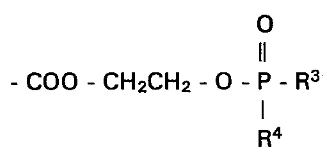 (IV)

wherein $R^3$ and $R^4$ are the same or different and represent alkyl having 1 to 4 carbon atoms, a radical of the formula V

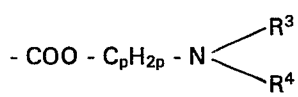 (V)

wherein $R^3$ and $R^4$ have the above meanings and p is a number from 1 to 4; or a radical of the formula VI

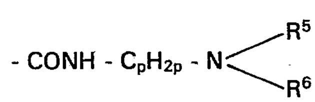 (VI)

wherein $R^5$ and $R^6$ are the same or different and each is alkyl having 1 to 4 carbon atoms, and p is

a number from 1 to 4; as well as the quaternized groups corresponding to the formulas V and VI, characterised in that 5 to 50% by weight of an optionally N-substituted vinylformamide of the formula Ia

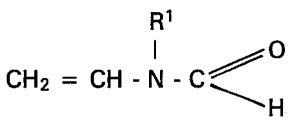

(Ia)

10 to 95% by weight of acrylamide and 0 to 85% by weight of an ethylenically unsaturated monomer of the formula IIIa

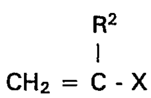

(IIIa)

wherein $R^1$, $R^2$ and X have the above meanings are copolymerized in a manner known per se in water, an organic solvent or in an emulsion.

7. Process according to claim 6 for preparing a water-soluble copolymer, characterised in that 5 to 30% by weight of the optionally N-substituted vinylformamide of the formula Ia, 50 to 80% by weight of acrylamide and 1 to 60% by weight of the ethylenically unsaturated monomer of the formula IIIa are copolymerized.

8. Process according to claims 6 and 7 for preparing a water-soluble copolymer, characterised in that an ethylenically unsaturated monomer of the formula IIIa is used, wherein X is carboxyl, alkanoylamino having 1 to 4 carbon atoms unsubstituted or N-substituted with methylol or alkyl having 1 to 4 carbon atoms, pyrrolidonyl-(1), or a radical of formula V or VI, mentioned and defined above, it being possible for the carboxyl group to be present as sodium-, potassium- or ammonium salt.

9. Process according to claims 6 to 8 for preparing a water-soluble copolymer, characterised in that the polymerization reaction is carried out until a K-value of between 25 and 250 corresponding to a molecular weight of between 20,000 and $15 \times 10^6$ is reached.

10. Process according to claims 6 to 9, characterised in that the copolymer which has been obtained is dissolved in water to give a 0.5 to 65% by weight solution.

**Revendications pour les Etats contractants:**
BE, CH, DE, FR, LI, NL

1. Procédé d'activation de forages d'exploitation de gaz naturel et de pétrole par acidification sous pression avec une solution acide, procédé caractérisé en ce que la solution acide contient 0,06 à 0,12% en poids d'un copolymère soluble dans l'eau ou dans des acides aqueux, qui comprend dans sa macromolécule au moins 5% en poids de motifs avec un groupe formylamino de formule

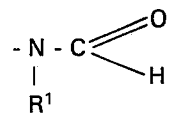

$R^1$ représentant l'hydrogène ou le groupe méthyle ou hydroxyméthyle;
et au moins 10% en poids de motifs avec un groupe aminocarbonyle de formule

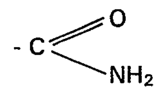

2. Procédé selon la revendication 1, caractérisé en ce que le copolymère comprend en distribution statistique 5 à 50% en poids de motifs de formule I

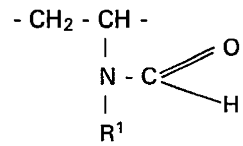

(I)

10 à 95% en poids de motifs de formule II

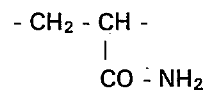

(II)

et 0 à 85% en poids de motifs de formule III

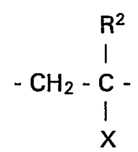

(III)

formules dans lesquelles:
$R^1$ représente l'hydrogène, un méthyle ou un hydroxyméthyle,
$R^2$ l'hydrogène ou un méthyle, et
X le groupe cyano, le groupe carboxyle ou un sel de métal alcalin ou d'ammonium de ce groupe; un alcoxycarbonyle en $C_1$-$C_6$; un hydroxyalcoxycarbonyle en $C_1$-$C_3$; le groupe N-méthylolaminocarbonyle répondant à la formule $HOCH_2NH$-CO- et dont le groupe méthylol peut être éventuellement éthérifié par des alcanols en $C_1$-$C_4$; un alcanoylamino avec jusqu'à 4 atomes de carbone pouvant être éventuellement substitué sur l'atome d'azote par un groupe méthylol ou un alkyle en $C_1$-$C_4$; le groupe pyrrolidonyle-(1), phényle ou pyridinium; le groupe acide sulfonique; un groupe sulfoalkylaminocarbonyle en $C_1$-$C_4$; le groupe acide phosphonique; les groupes sulfonique et phosphonique pouvant être à l'état de sels de métaux alcalins ou d'ammonium; un radical de formule IV

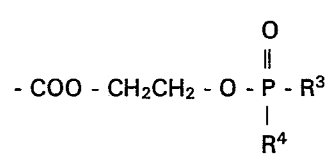

(IV)

$R^3$ et $R^4$, qui peuvent être identiques ou différents l'un de l'autre, représentant chacun un alkyle en $C_1$-$C_4$; un radical de formule V

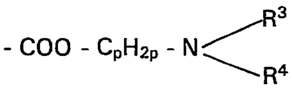

(V)

$R^3$ et $R^4$ ayant les significations ci-dessus et p étant un nombre de 1 à 4; ou un radical de formule VI

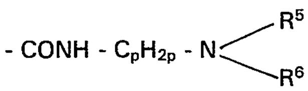

(VI)

$R^5$ et $R^6$, identiques ou différents l'un de l'autre, représentant chacun un alkyle en $C_1$-$C_4$, et p ayant la signification ci-dessus; ou encore un groupe (V) ou (VI) quaternisé.

3. Procédé selon la revendication 1 ou 2, le copolymère comprend
5 à 30% en poids de motifs de formule I,
50 à 80% en poids de motifs de formule II,
et 1 à 60% en poids de motifs de formule III.

4. Procédé selon l'une quelconque des revendications 1 à 3, caractérisé en ce que dans le copolymère employé X est un groupe carboxyle, sulfonique, 3-sulfo-2-méthyl-propyl-(2)-aminocarbonyle de formule

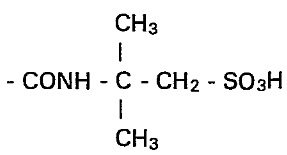

un alcanoylamino en $C_1$-$C_4$, sans substituant ou substitué sur l'azote par un groupe méthylol ou un alkyle en $C_1$-$C_4$, un groupe pyrrolidonyle-(1), ou encore un radical de formule V ou VI, ou le sel de sodium, potassium ou ammonium du groupe carboxylique ou sulfonique.

5. Procédé selon l'une quelconque des revendications 1 à 4, caractérisé en ce que le copolymère employé a une valeur K de 25 à 250, correspondant à des masses moléculaires de 20 000 à $15 \times 10^6$.

6. Copolymère soluble dans l'eau, comprenant en distribution statistique: 5 à 50% en poids de motifs de formule I

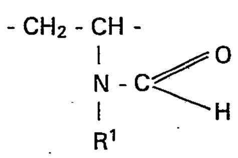

(I)

10 à 95% en poids de motifs de formule II

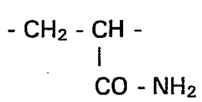

(II)

et 0 à 85% en poids de motifs de formule III

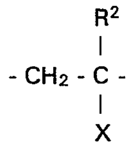

(III)

formules dans lesquelles:
$R^1$ représente l'hydrogène, un méthyle ou un hydroxyméthyle,
$R^2$ l'hydrogène ou un méthyle, et
X le groupe cyano; le groupe carboxyle ou un sel de métal alcalin ou d'ammonium de ce groupe; un alcoxycarbonyle en $C_1$-$C_6$; un hydroxyalcoxycarbonyle en $C_1$-$C_3$; le groupe N-méthylolaminocarbonyle répondant à la formule $HOCH_2NH$-CO- et dont le groupe méthylol peut être éventuellement éthérifié par des alcanols en $C_1$-$C_4$; un alcanoylamino en $C_1$-$C_4$ pouvant être éventuellement substitué sur l'atome d'azote par un groupe méthylol ou un alkyle en $C_1$-$C_4$; le groupe pyrrolidonyle-(1), phényle ou pyridinium; le groupe acide phosphonique; le groupe phosphonique pouvant être à l'état de sels de métaux alcalins ou d'ammonium; un radical de formule IV

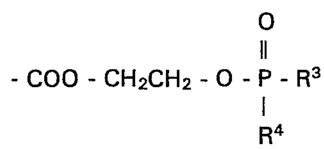

(IV)

$R^3$ et $R^4$, qui peuvent être identiques ou différents l'un de l'autre, représentant chacun un alkyle en $C_1$-$C_4$; un radical de formule V

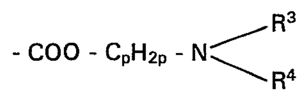

(V)

$R^3$ et $R^4$ ayant les significations ci-dessus et p étant un nombre de 1 à 4; ou un radical de formule VI

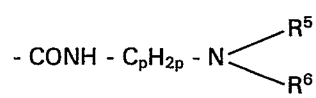

(VI)

$R^5$ et $R^6$, identiques ou différents l'un de l'autre, représentant chacun un alkyle en $C_1$-$C_4$, et p ayant la signification ci-dessus; ou encore un groupe (V) ou (VI) quaternisé.

7. Copolymère hydrosoluble selon la revendication 6, caractérisé en ce qu'il comprend
5 à 30% en poids de motifs de formule I,
50 à 80% en poids de motifs de formule II,
et 1 à 60% en poids de motifs de formule III.

8. Copolymère hydrosoluble selon la revendication 6 ou 7, caractérisé en ce que X est un carboxyle, un alcanoylamino en $C_1$-$C_4$ éventuellement substitué sur l'azote par un groupe méthylol ou un alkyle en $C_1$-$C_4$, un radical pyrrolidonyle-(1), ou un radical de formule V ~~ou VI~~, ou le sel de sodium, potassium ou ammonium du groupe carboxyle.

9. Copolymère selon l'une quelconque des revendications 6 à 8, ayant une valeur K de 25 à 250, correspondant à des masses moléculaires de 20 000 à $15 \times 10^6$.

10. Solution aqueuse de copolymère contenant 0,5 à 6% en poids d'un copolymère selon l'une quelconque des revendications 6 à 9.

11. Emulsion eau-dans-l'huile, dont la phase aqueuse est une solution d'un copolymère selon l'une quelconque des revendications 6 à 9.

**Revendications pour l'Etat contractant:** AT

1. Procédé d'activation de forages d'exploitation de gaz naturel et de pétrole par acidification sous pression avec une solution acide, procédé caractérisé en ce que la solution acide contient 0,06 à 0,12% en poids d'un copolymère soluble dans l'eau ou dans des acides aqueux, qui comprend dans sa macromolécule au moins 5% en poids de motifs avec un groupe formylamino de formule

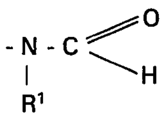

$R^1$ représentant l'hydrogène ou le groupe méthyle ou hydroxyméthyle;
et au moins 10% en poids de motifs avec un groupe aminocarbonyle de formule

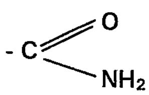

2. Procédé selon la revendication 1, caractérisé en ce que le copolymère comprend en distribution statistique 5 à 50% en poids de motifs de formule I

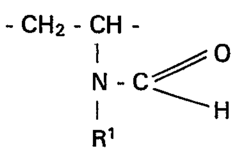

(I)

10 à 95% en poids de motifs de formule II

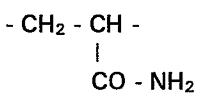

(II)

et 0 à 85% en poids de motifs de formule III

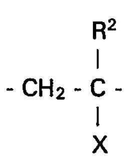

(III)

formules dans lesquelles:
$R^1$ représente l'hydrogène, un méthyle ou un hydroxyméthyle,
$R^2$ l'hydrogène ou un méthyle, et
X le groupe cyano, le groupe carboxyle ou un sel de métal alcalin ou d'ammonium de ce groupe; un alcoxycarbonyle en $C_1$-$C_6$; un hydroxyalcoxycarbonyle en $C_1$-$C_3$; le groupe N-méthylolaminocarbonyle répondant à la formule $HOCH_2NH$-CO- et dont le groupe méthylol peut être éventuellement éthérifié par des alcanols en $C_1$-$C_4$; un alcanoylamino avec jusqu'à 4 atomes de carbone pouvant être éventuellement substitué sur l'atome d'azote par un groupe méthylol ou un alkyle en $C_1$-$C_4$; le groupe pyrrolidonyle-(1), phényle ou pyridinium; le groupe acide sulfonique; un groupe sulfoalkylaminocarbonyle en $C_1$-$C_4$; le groupe acide phosphonique; les groupes sulfonique et phosphonique pouvant être à l'état de sels de métaux alcalins ou d'ammonium; un radical de formule IV

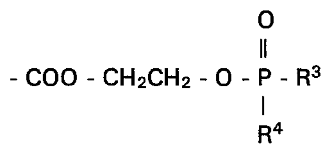

(IV)

$R^3$ et $R^4$, qui peuvent être identiques ou différents l'un de l'autre, représentant chacun un alkyle en $C_1$-$C_4$; un radical de formule V

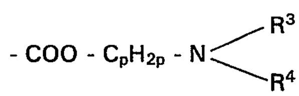

(V)

$R^3$ et $R^4$ ayant les significations ci-dessus et p étant un nombre de 1 à 4; ou un radical de formule VI

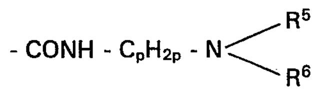

(VI)

$R^5$ et $R^6$, identiques ou différents l'un de l'autre, représentant chacun un alkyle en $C_1$-$C_4$, et p ayant la signification ci-dessus; ou encore un groupe (V) ou (VI) quaternisé.

3. Procédé selon la revendication 1 ou 2, dans lequel le copolymère comprend
5 à 30% en poids de motifs de formule I,
50 à 80% en poids de motifs de formule II,
et 1 à 60% en poids de motifs de formule III.

4. Procédé selon l'une quelconque des revendications 1 à 3, dans lequel, dans le motif de formule III, X est un groupe carboxyle, sulfonique, 3-sulfo-2-méthyl-propyl-(2)-aminocarbonyle de formule

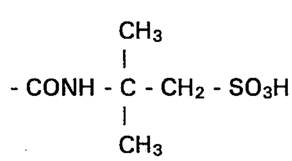

un alcanoylamino en $C_1$-$C_4$, sans substituant ou substitué sur l'azote par un groupe méthylol ou un alkyle en $C_1$-$C_4$, un groupe pyrrolidonyle-(1), ou encore un radical de formule V ou VI, ou le sel de sodium, potassium ou ammonium du groupe carboxylique ou sulfonique.

5. Procédé selon l'une quelconque des revendications 1 à 4, dans lequel le copolymère employé a une

valeur K de 25 à 250, correspondant à des masses moléculaires de 20 000 à $15 \times 10^6$.

6. Procédé de préparation d'un copolymère hydrosoluble comprenant, en répartition statistique:

5 à 50% en poids de motifs de formule I

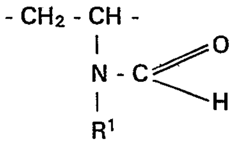
(I)

10 à 95% en poids de motifs de formule II

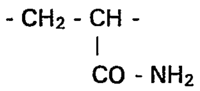
(II)

et 0 à 85% en poids de motifs de formule III

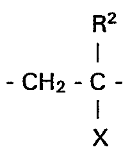
(III)

formules dans lesquelles:
$R^1$ représente l'hydrogène, un méthyle ou un hydroxyméthyle,
$R^2$ l'hydrogène ou un méthyle, et
X le groupe cyano; le groupe carboxyle ou un sel de métal alcalin ou d'ammonium de ce groupe; un alcoxycarbonyle en $C_1$-$C_6$; un hydroxyalcoxycarbonyle en $C_1$-$C_3$; le groupe N-méthylolaminocarbonyle répondant à la formule $HOCH_2NH$-CO- et dont le groupe méthylol peut être éventuellement éthérifié par des alcanols en $C_1$-$C_4$; un alcanoylamino en $C_1$-$C_4$ pouvant être éventuellement substitué sur l'atome d'azote par un groupe méthylol ou un alkyle en $C_1$-$C_4$; le groupe pyrrolidonyle-(1), phényle ou pyridinium; le groupe acide phosphonique; le groupe phosphonique pouvant être à l'état de sels de métaux alcalins ou d'ammonium; un radical de formule IV

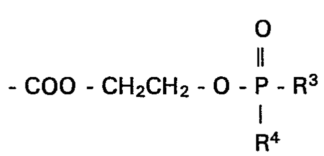
(IV)

$R^3$ et $R^4$, qui peuvent être identiques ou différents l'un de l'autre, représentant chacun un alkyle en $C_1$-$C_4$; un radical de formule V

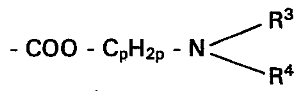
(V)

$R^3$ et $R^4$ ayant les significations ci-dessus et p étant un nombre de 1 à 4; ou un radical de formule VI

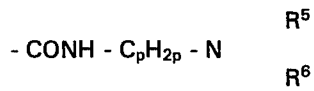
(VI)

$R^5$ et $R^6$, identiques ou différents l'un de l'autre, représentant chacun un alkyle en $C_1$-$C_4$, et p ayant la signification ci-dessus; ou encore un groupe (V) ou (VI) quaternisé,
procédé caractérisé en ce que l'on copolymérise d'une manière en elle-même connue 5 à 50% en poids, d'un vinylformamide éventuellement substitué sur l'azote, de formule Ia ci-dessous

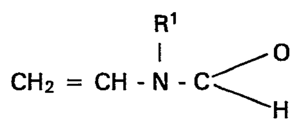
(Ia)

avec 10 à 95% d'acrylamide et 0 à 85% d'un monomère éthylénique de formule IIIa

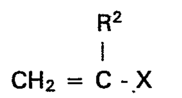
(IIIa)

($R^1$, $R^2$ et X ayant les significations précédentes) dans de l'eau ou un solvant organique ou dans une émulsion.

7. Procédé selon la revendication 6, caractérisé en ce qu'on copolymérise 5 à 30% en poids du vinylformamide Ia avec 50 à 80% d'acrylamide et 1 à 60% du monomère éthylénique IIIa.

8. Procédé selon la revendication 6 ou 7, caractérisé en ce que, dans le monomère IIIa, X est un carboxyle, un alcanoyl-amino en $C_{1-4}$ éventuellement substitué sur l'azote par un groupe méthylol ou par un alkyle en $C_{1-4}$, un radical pyrrolidonyle-(1) ou un radical de formule V ou VI définies à la revendication 6, ou un sel de sodium, potassium ou ammonium du groupe carboxyle ci-dessus.

9. Procédé selon l'une quelconque des revendications 6 à 8, caractérisé en ce qu'on produit la polymérisation jusqu'à une valeur K du copolymère formé de 25 à 250, correspondant à des masses moléculaires de 20 000 à $15 \times 10^6$.

10. Procédé selon l'une quelconque des revendications 6 à 9, caractérisé en ce qu'on dissout le copolymère obtenu dans de l'eau à une concentration de 0,5 à 6% en poids.

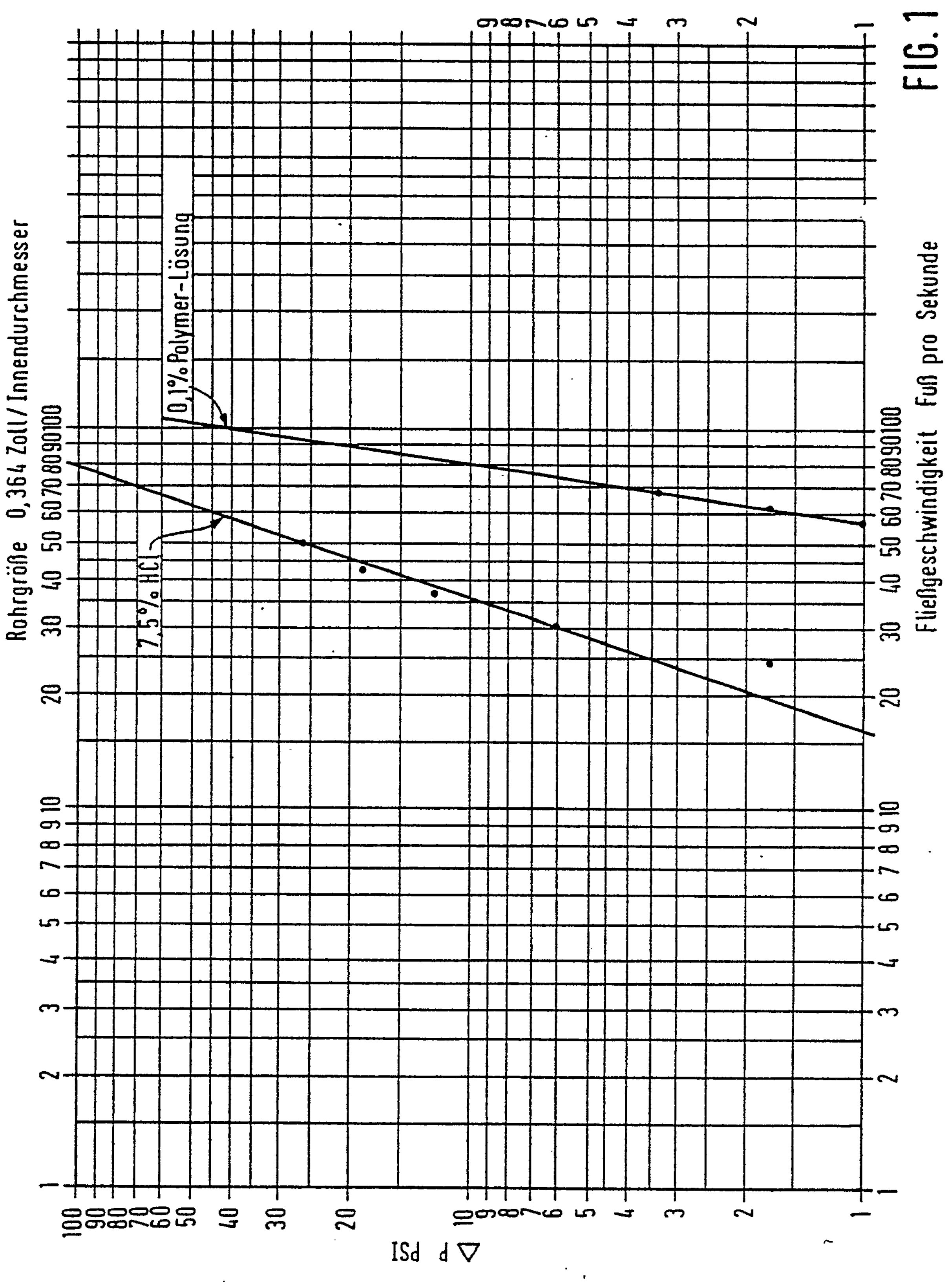
Rohrgröße 0,364 Zoll / Innendurchmesser
0,1% Polymer-Lösung
7,5% HCl
Fließgeschwindigkeit Fuß pro Sekunde
Δ p PSI

FIG. 1

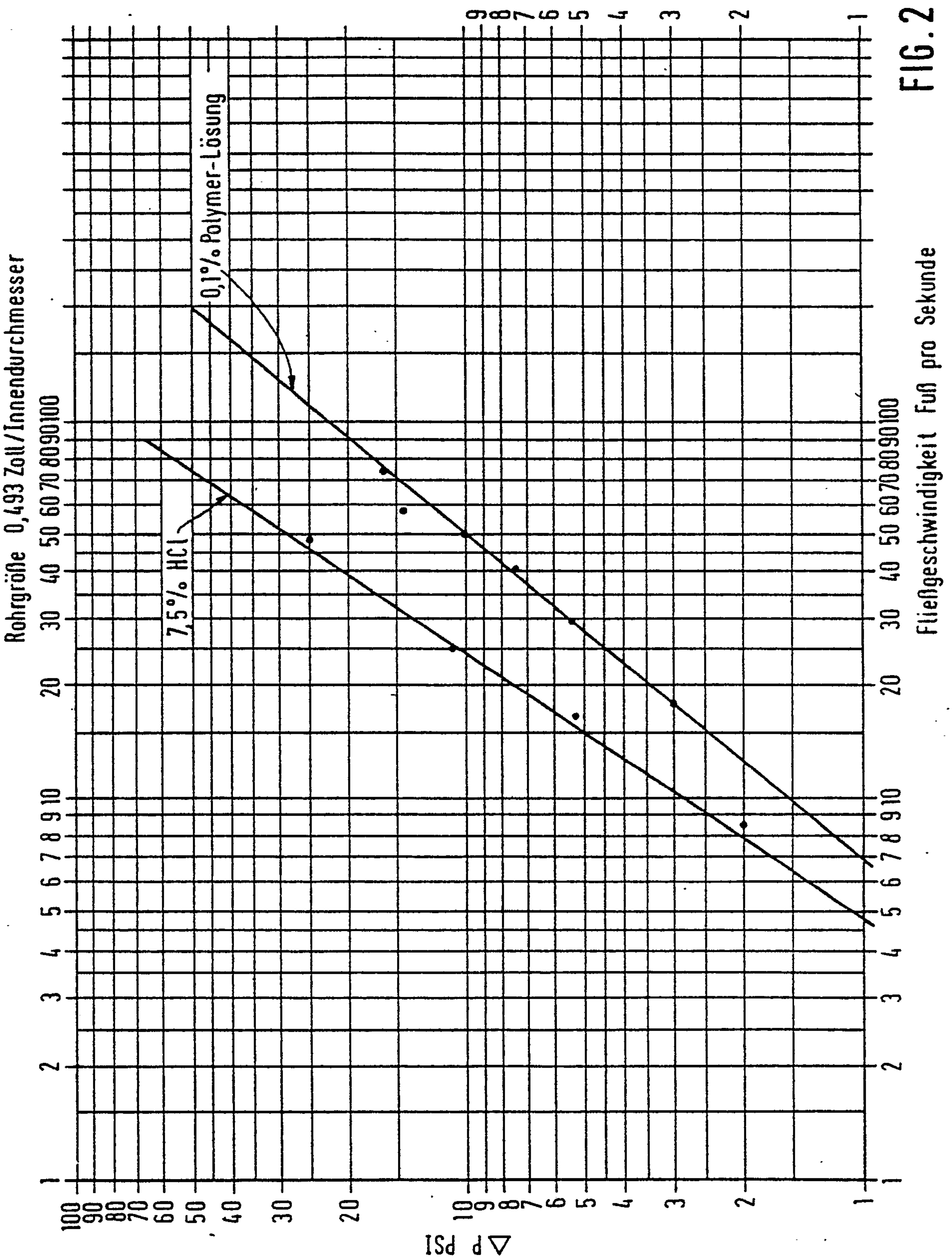

Rohrgröße 0,493 Zoll/Innendurchmesser
0,1% Polymer-Lösung
7,5% HCl
Δ p PSI
Fließgeschwindigkeit Fuß pro Sekunde


FIG. 2

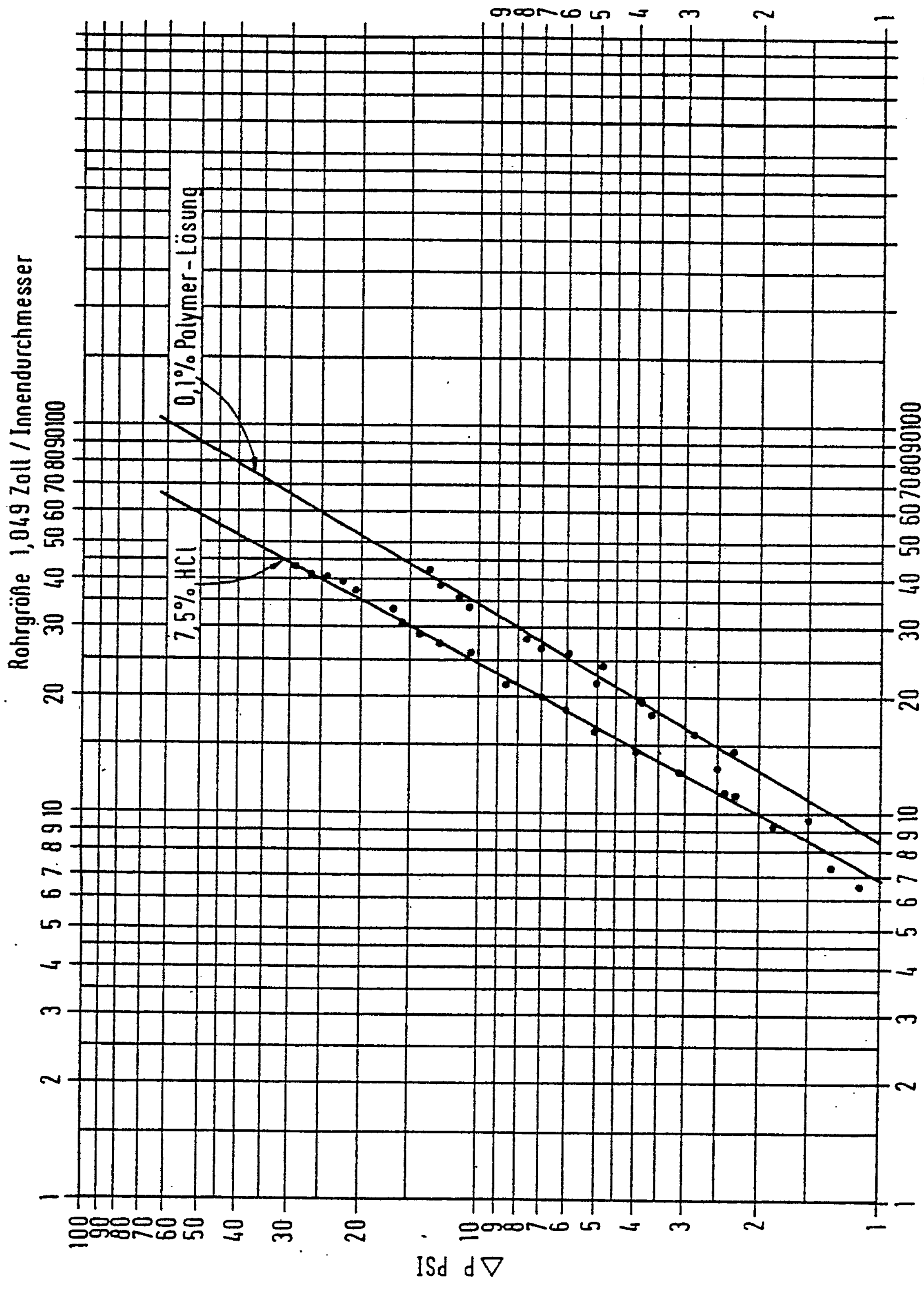
Rohrgröße 1,049 Zoll / Innendurchmesser
0,1% Polymer-Lösung
7,5% HCl
Fließgeschwindigkeit Fuß pro Sekunde
Δ P PSI

FIG. 3